# EUROPEAN PATENT APPLICATION

(11) **EP 4 524 797 A1**
(43) Date of publication of application: **19.03.2025**
(21) Application number: 23884687.7
(22) Date of filing: 25.10.2023
(51) Int. Cl.: G06F 21/60

(54) **FILE MANAGEMENT METHOD, TERMINAL DEVICE AND READABLE STORAGE MEDIUM**

(30) Priority: 31.10.2022 CN 202211351551
(71) Applicant: Huawei Technologies Co., Ltd., Shenzhen, Guangdong 518129 (CN)
(72) Inventor: JIANG, Xiaofeng, Shenzhen, Guangdong 518129 (CN)
(74) Representative: Gill Jennings & Every LLP
(86) International application number: PCT/CN2023/126484
(87) International publication number: WO 2024/093755

(57) **Abstract**

This application provides a file management method, a terminal device, and a readable storage medium. The file management method includes: receiving a first open operation of a user for opening a first file; in response to the first open operation, running a file management application, and displaying a first tab page in a display window of the file management application; when the first file is a confidential file, creating and displaying, by a data confidentiality module, the first window, where the first window is located in the first tab page and is located at an upper layer of the display window; and displaying, by the data confidentiality module, the first file in the first window. The user perceives that the file management application can open a common file and a confidential file, but does not perceive the data confidentiality module, thereby improving user experience in viewing and operating a file.

## Description

This application claims priority to Chinese Patent Application No. 202211351551.3, filed with the China National Intellectual Property Administration on October 31, 2022 and entitled "FILE MANAGEMENT METHOD, TERMINAL DEVICE, AND READABLE STORAGE MEDIUM", which is incorporated herein by reference in its entirety.

### TECHNICAL FIELD

This application relates to the field of terminal technologies, and in particular, to a file management method, a terminal device, and a readable storage medium.

### BACKGROUND

With popularization of electronic files, users pay more attention to privacy protection of electronic files, and raise higher requirements on security of the electronic files. To ensure security of a file, a data encryption technology is usually used to encrypt the file.

Currently, a confidential file and a common file are usually opened by using different application instances, but users may obviously perceive that different applications are used, resulting in poor user experience in viewing and operating the confidential file and the common file.

### SUMMARY

This application provides a file management method, a terminal device, and a readable storage medium, to improve user experience in viewing and operating a confidential file.

According to a first aspect, this application provides a file management method, including: receiving a first open operation of a user for opening a first file; in response to the first open operation, running a file management application, and displaying a first tab page in a display window of the file management application; when the first file is a confidential file, creating and displaying, by a data confidentiality module, a first window, where the first window is located in the first tab page and is located at an upper layer of the display window; and displaying, by the data confidentiality module, the first file in the first window.

According to the file management method provided in the first aspect, when a terminal device opens a file, if the file management application determines that the file is a confidential file, a data confidentiality application is triggered to run, and the data confidentiality application creates the first window at the upper layer of the display window of the file management application, to display the confidential file. Because the confidential file is opened by the data confidentiality application and belongs to a process space different from the file management application, protection of the confidential file is ensured. In addition, the user perceives only the file management application, but does not perceive the data confidentiality application. The user can view a common file and a confidential file in the same file management application. This improves user experience in viewing and operating a file.

In a possible implementation, the display window further includes a second tab page, and the second tab page is used to display a common file. The file management method further includes: receiving a first tab page switching operation of the user, where the first tab page switching operation is used to switch from display of the first tab page to display of the second tab page; in response to the first tab page switching operation, sending, by the file management application, first indication information to the data confidentiality module, where the first indication information indicates to hide the first window; hiding, by the data confidentiality module, the first window based on the first indication information; and displaying, by the file management application, the second tab page.

In this implementation, the terminal device currently displays the confidential file (the first file), and the user switches from display of the confidential file to display of the common file. Because the confidential file is displayed under control of the data confidentiality module, when the user switches to the common file for display, the confidential file displayed in the first window needs to be hidden. The file management application sends the first indication information to the data confidentiality module, so that the data confidentiality module hides the first window based on the first indication information. The user perceives only the file management application, but does not perceive the data confidentiality application. The user can switch between view of the common file and view of the confidential file in the same file management application. This improves user experience in viewing and operating a file.

In a possible implementation, the file management method further includes: receiving a second tab page switching operation of the user, where the second tab page switching operation is used to switch from display of the second tab page to display of the first tab page; in response to the second tab page switching operation, sending, by the file management application, second indication information to the data confidentiality module, where the second indication information indicates to display the first window; and determining, by the data confidentiality module, latest location and size information of the first window based on the second indication information, and updating and displaying the first window at the upper layer of the display window based on the latest location and size information.

In this implementation, the terminal device currently displays the common file, and the user switches from display of the confidential file to display of the confidential file (the first file). Because the confidential file is displayed under control of the data confidentiality module, the first window corresponding to the confidential file is currently in a hidden state, and the data confidentiality module needs to control to redisplay the first window. To ensure that a display location and a display size of the first window are correct, match the display window of the file application management, and achieve follow-up and binding display effect, the data confidentiality module needs to determine the latest location and size information of the first window, and update and display the first window at the upper layer of the display window based on the latest location and size information. The user perceives only the file management application, but does not perceive the data confidentiality application. The user can switch between view of the common file and view of the confidential file in the same file management application. This improves user experience in viewing and operating a file.

In a possible implementation, the file management method further includes: receiving a second open operation of the user for opening a second file; in response to the second open operation, displaying, by the file management application, a third tab page in the display window; sending, by the file management application, the first indication information to the data confidentiality module, where the first indication information indicates to hide the first window; and hiding, by the data confidentiality module, the first window based on the first indication information.

In this implementation, the terminal device currently displays the confidential file (the first file), and the user further opens the second file. Because the confidential file is displayed under control of the data confidentiality module, when the user further opens the second file, the confidential file displayed in the first window needs to be hidden. The file management application sends the first indication information to the data confidentiality module, so that the data confidentiality module hides the first window based on the first indication information. The user perceives only the file management application, but does not perceive the data confidentiality application. This improves user experience in viewing and operating a file.

In a possible implementation, the file management method further includes: receiving a tab page close operation of the user, where the tab page close operation is used to close the first tab page; in response to the tab page close operation, sending, by the file management application, third indication information to the data confidentiality module, where the third indication information indicates to close the first window; closing, by the file management application, the first tab page; and closing, by the data confidentiality module, the first window based on the third indication information.

In this implementation, the terminal device currently displays the confidential file (the first file), and the user closes, in the file management application, the tab page corresponding to the confidential file. Because the confidential file is displayed under control of the data confidentiality module, when the user closes the confidential file, the confidential file displayed in the first window needs to be closed. The file management application sends the third indication information to the data confidentiality module, so that the data confidentiality module closes the first window based on the third indication information. The user perceives only the file management application, but does not perceive the data confidentiality application. This improves user experience in viewing and operating a file.

In a possible implementation, the file management method further includes: receiving an operation of the user for closing the file management application; in response to the operation of the user for closing the file management application, sending, by the file management application, third indication information to the data confidentiality module, where the third indication information indicates to close the first window; closing, by the data confidentiality module, the first window based on the third indication information; and ending running of the file management application.

In this implementation, the terminal device currently displays the confidential file (the first file), and the user closes the entire file management application. Because the confidential file is displayed under control of the data confidentiality module, when the user closes the entire file management application, the confidential file displayed in the first window needs to be closed. The file management application sends the third indication information to the data confidentiality module, so that the data confidentiality module closes the first window based on the third indication information. The user perceives only the file management application, but does not perceive the data confidentiality application. This improves user experience in viewing and operating a file.

In a possible implementation, the file management method further includes: monitoring, by the data confidentiality module, a location and a size of the display window in real time; if the location or the size of the display window changes, obtaining, by the data confidentiality module, location and size update information of the first window; and updating and displaying, by the data confidentiality module, the first window at the upper layer of the display window based on the location and size update information.

In this implementation, the location and the size of the display window are monitored in real time. When the location or the size of the display window changes, to achieve effect of binding the first window to the display window, a location or a size of the first window also needs to change adaptively.

In a possible implementation, the creating and displaying, by a data confidentiality module, a first window includes: monitoring, by the data confidentiality module, the location and the size of the display window, to obtain a monitoring result; determining, by the data confidentiality module, location and size information of the first window based on the monitoring result; and creating and displaying, by the data confidentiality module, the first window at the upper layer of the display window based on the location and size information of the first window.

In a possible implementation, the monitoring result includes a location and size configuration value that is set by the file management application for the first window; and the determining, by the data confidentiality module, location and size information of the first window based on the monitoring result includes: determining, by the data confidentiality module, the location and size configuration value as the location and size information of the first window.

In this implementation, the location and the size of the first window are configured by the file management application, so that display effect of the first window following the file management application can be improved.

In a possible implementation, the monitoring result includes location and size information of the display window; and the determining, by the data confidentiality module, location and size information of the first window based on the monitoring result includes: determining, by the data confidentiality module, the location and size information of the first window based on the location and size information of the display window.

In a possible implementation, before the creating and displaying, by a data confidentiality module, a first window, the method further includes: determining, by the file management application, that the first file is a confidential file; performing confidential file verification on the first file through a first interface provided by a data confidentiality kit, where the confidential file verification succeeds; and obtaining, by the data confidentiality module, the first file, and performing user credential verification on the first file, where the user credential verification succeeds.

In this implementation, a user credential verification process is performed on the confidential file, so that security of opening the confidential file by the user is improved.

In a possible implementation, the determining, by the file management application, that the first file is a confidential file includes: determining, by the file management application based on a file type of the first file, that the first file is a confidential file.

In a possible implementation, the data confidentiality module includes a data confidentiality application; and the creating and displaying, by a data confidentiality module, a first window includes: invoking, by the data confidentiality application, a second interface provided by the data confidentiality kit to monitor the location and the size of the display window, to obtain the monitoring result; determining, by the data confidentiality application, location and size information of the first window based on the monitoring result; and creating and displaying, by the data confidentiality application, the first window at the upper layer of the display window based on the location and size information of the first window.

In a possible implementation, the data confidentiality module includes a data confidentiality application and a data confidentiality service; and the obtaining, by the data confidentiality module, a first file, and performing user credential verification on the first file, where the user credential verification succeeds includes: invoking, by the data confidentiality application, the data confidentiality service; performing, by the data confidentiality service, the user credential verification on the first file to obtain a user credential verification result, where the user credential verification result indicates that the user credential verification succeeds; and returning, by the data confidentiality service, the user credential verification result to the data confidentiality application.

In a possible implementation, the data confidentiality kit is integrated into an SDK.

According to a second aspect, this application provides a file management apparatus, including: a detection module, configured to receive a first open operation of a user for opening a first file, where in response to the first open operation, a file management application is run, and configured to display a first tab page in a display window of the file management application; and a data confidentiality module, configured to create and display a first window when the first file is a confidential file, where the first window is located in the first tab page and is located at an upper layer of the display window. The data confidentiality module is further configured to display the first file in the first window.

In a possible implementation, the display window further includes a second tab page, and the second tab page is used to display a common file. The detection module is further configured to receive a first tab page switching operation of the user, where the first tab page switching operation is used to switch from display of the first tab page to display of the second tab page. In response to the first tab page switching operation, the file management application is further configured to send first indication information to the data confidentiality module, where the first indication information indicates to hide the first window. The data confidentiality module is further configured to hide the first window based on the first indication information. The file management application is further configured to display the second tab page.

In a possible implementation, the detection module is further configured to receive a second tab page switching operation of the user, where the second tab page switching operation is used to switch from display of the second tab page to display of the first tab page. In response to the second tab page switching operation, the file management application is further configured to send second indication information to the data confidentiality module, where the second indication information indicates to display the first window. The data confidentiality module is further configured to: determine latest location and size information of the first window based on the second indication information, and update and display the first window at the upper layer of the display window based on the latest location and size information.

In a possible implementation, the detection module is further configured to receive a second open operation of the user for opening the second file. In response to the second open operation, the file management application is further configured to: display a third tab page in the display window, and send the first indication information to the data confidentiality module, where the first indication information indicates to hide the first window. The data confidentiality module is further configured to hide the first window based on the first indication information.

In a possible implementation, the detection module is further configured to receive a tab page close operation of the user, where the tab page close operation is used to close the first tab page. In response to the tab page close operation, the file management application is further configured to send third indication information to the data confidentiality module, where the third indication information indicates to close the first window. The file management application is further configured to close the first tab page. The data confidentiality module is further configured to close the first window based on the third indication information.

In a possible implementation, the detection module is further configured to receive an operation of the user for closing the file management application. In response to the operation of the user for closing the file management application, the file management application is further configured to end running after sending the third indication information to the data confidentiality module, where the third indication information indicates to close the first window. The data confidentiality module is further configured to close the first window based on the third indication information.

In a possible implementation, the data confidentiality module is further configured to: monitor a location and a size of the display window in real time; if the location or the size of the display window changes, obtain location and size update information of the first window; and update and display the first window at the upper layer of the display window based on the location and size update information.

In a possible implementation, the data confidentiality module is configured to: monitor the location and the size of the display window, to obtain a monitoring result; determine location and size information of the first window based on the monitoring result; and create and display the first window at the upper layer of the display window based on the location and size information of the first window.

In a possible implementation, the monitoring result includes a location and size configuration value that is set by the file management application for the first window. The data confidentiality module is configured to determine the location and size configuration value as the location and size information of the first window.

In a possible implementation, the monitoring result includes location and size information of the display window. The data confidentiality module is configured to determine the location and size information of the first window based on the location and size information of the display window.

In a possible implementation, before the data confidentiality module creates and displays the first window, the file management application is further configured to: determine that the first file is a confidential file, and perform confidential file verification on the first file through a first interface provided by a data confidentiality kit, where the confidential file verification succeeds. The data confidentiality module is further configured to: obtain the first file, and perform user credential verification on the first file, where the user credential verification succeeds.

In a possible implementation, the file management application is configured to determine, based on a file type of the first file, that the first file is a confidential file.

In a possible implementation, the data confidentiality module includes a data confidentiality application. The data confidentiality application is configured to invoke a second interface provided by the data confidentiality kit to monitor the location and the size of the display window, to obtain the monitoring result. The data confidentiality application is configured to determine the location and size information of the first window based on the monitoring result. The data confidentiality application is configured to: create and display the first window at the upper layer of the display window based on the location and size information of the first window.

In a possible implementation, the data confidentiality module includes a data confidentiality application and a data confidentiality service. The data confidentiality application is configured to invoke the data confidentiality service. The data confidentiality service is configured to perform the user credential verification on the first file to obtain a user credential verification result, where the user credential verification result indicates that the user credential verification succeeds. The data confidentiality service is configured to return the user credential verification result to the data confidentiality application.

In a possible implementation, the data confidentiality kit is integrated into an SDK.

According to a third aspect, a terminal device is provided, including a processor. The processor is configured to: be coupled to a memory, read instructions in the memory, and enable, based on the instructions, the terminal device to perform the method provided in the first aspect.

According to a fourth aspect, a computer-readable storage medium is provided. The computer-readable storage medium stores instructions, and when the instructions are run on a computer or a processor, the method provided in the first aspect is implemented.

According to a fifth aspect, a program product is provided. The program product includes a computer program, and the computer program is stored in a readable storage medium. At least one processor of a terminal device may read the computer program from the readable storage medium, and the at least one processor executes the computer program to enable the terminal device to implement the method provided in the first aspect.

### BRIEF DESCRIPTION OF DRAWINGS

FIG. 1A to FIG. 1C are a group of interface diagrams of a file management application according to an embodiment of this application;
FIG. 2 is a diagram of a display interface of a confidential file in related technologies according to an embodiment of this application;
FIG. 3(a) to FIG. 3(d) are diagrams of another display interface of a confidential file in related technologies according to an embodiment of this application;
FIG. 4 is a diagram of a display interface of a confidential file according to an embodiment of this application;
FIG. 5(a) to FIG. 5(d) are diagrams of another display interface of a confidential file according to an embodiment of this application;
FIG. 6 is a diagram of a structure of a software architecture of a terminal device according to an embodiment of this application;
FIG. 7 is a diagram of another structure of a software architecture of a terminal device according to an embodiment of this application;
FIG. 8A to FIG. 8H are diagrams of a group of scenarios of file management according to an embodiment of this application;
FIG. 9A to FIG. 9D are a group of diagrams of a first window and a display window of a file management application according to an embodiment of this application;
FIG. 10A and FIG. 10B are a flowchart of a file management method according to an embodiment of this application;
FIG. 11 is another flowchart of a file management method according to an embodiment of this application;
FIG. 12 is still another flowchart of a file management method according to an embodiment of this application;
FIG. 13 is yet another flowchart of a file management method according to an embodiment of this application;
FIG. 14 is a diagram of a structure of a file management apparatus according to an embodiment of this application; and
FIG. 15 is a diagram of a structure of a terminal device according to an embodiment of this application.

### DESCRIPTION OF EMBODIMENTS

To make objectives, technical solutions, and advantages of this application clearer, the following describes embodiments of this application with reference to the accompanying drawings. Specific operation methods, function descriptions, and the like in method embodiments may also be applied to apparatus embodiments or system embodiments.

A file management method provided in embodiments of this application is applicable to a scenario in which a terminal device operates a confidential file, for example, including but not limited to the following scenarios: opening the confidential file, closing the confidential file, or switching between the confidential file and another file for display. A file is also referred to as a document. An application used to open a file is installed on the terminal device. A name, a developer, a development language, and the like of the application are not limited in embodiments of this application.

A name and a type of the terminal device are not limited in embodiments of this application. For example, the terminal device may also be referred to as a terminal (terminal), an electronic device, user equipment (user equipment, UE), or the like. Optionally, the terminal device may be a communication chip having a communication module. For example, the terminal device may be a mobile phone (mobile phone), a tablet computer (pad), a computer, a virtual reality (virtual reality, VR) terminal, an augmented reality (augmented reality, AR) terminal, a vehicle-mounted device, a wearable device, a wireless terminal in industrial control (industrial control), a wireless terminal in a smart home (smart home), or the like.

For ease of understanding, basic concepts in this application are first described.

### 1. File management application, common file, and confidential file

A file management application is installed on the terminal device to manage and operate a file. The file management application is also referred to as a file manager, a file management app, or the like. A name of the application is not limited in embodiments of this application.

The file management application may be a system application on the terminal device, or may be a third-party application developed by a third party. For example, the file management application may be a word processing system (word processing system, WPS), Microsoft Office (Office software developed by the Microsoft Corporation), or the like. Optionally, the file management application may be pre-installed on the terminal device before delivery of the terminal device, or may be installed on the terminal device by a user after delivery of the terminal device.

It may be understood that there are various types of files. For a specific file management application, the file management application generally cannot support all file types.

In embodiments of this application, a file that can be directly opened by the file management application may be referred to as a common file. The common file may include at least one of the following: an original file that is not encrypted by using an encryption technology, a file that is encrypted by using an encryption technology supported by the file management application, or a file that meets a permission requirement of the file management application.

Unlike a common file, a file that cannot be directly opened by the file management application and that is encrypted by using an encryption technology may be referred to as a confidential file. When a confidential file is opened, a decryption technology corresponding to the encryption technology needs to be used. The confidential file can be opened only after being decrypted.

An encryption technology and a decryption technology used for a confidential file are not limited in embodiments of this application. Optionally, when encryption technologies are different, file types of confidential files may be different. Optionally, a name extension of the confidential file may indicate a file type of the confidential file. For example, a name extension of a confidential file generated by using an encryption technology A may be .A, and a name extension of a confidential file generated by using an encryption technology B may be .B.

### 2. Tab (tab) page and tab

In embodiments of this application, the file management application supports a plurality of tab (tab) pages. A tab page is also referred to as a tab, a sheet, or the like. Each tab page is used to display a file.

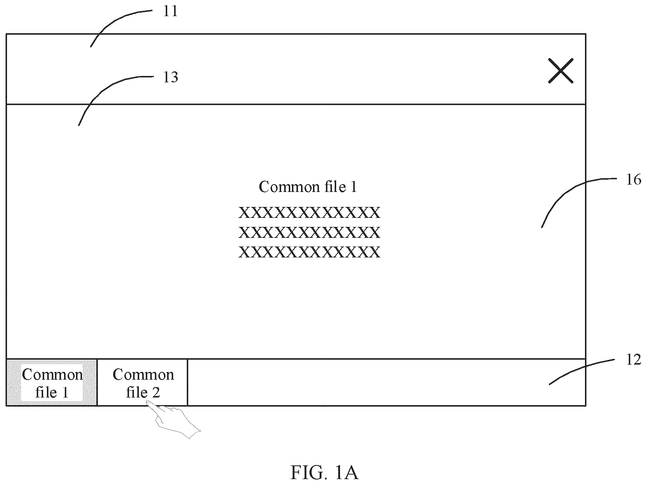

With reference to FIG. 1A to FIG. 1C, the following describes an interface of the file management application by using examples. However, FIG. 1A to FIG. 1C do not constitute any limitation thereto.

As shown in FIG. 1A, a display window 11 of the file management application includes a tab area 12 and a data area 16. The tab page includes a tab located in the tab area 12 and a tab page located in the data area 16. For example, in FIG. 1A, the tab area 12 includes two tabs whose names are respectively "Common file 1" and "Common file 2". A name of the tab is not limited in embodiments of this application, for example, is a file name of a corresponding file. The tab "Common file 1" corresponds to a tab page 13, that is, a tab page currently displayed in the display window 11, and is used to display a common file 1. Optionally, a tab page and a tab that are currently displayed by the file management application may be distinguished based on different display states of different tabs. For example, in FIG. 1A, if a background color of the tab "Common file 1" is gray, and a background color of the tab "Common file 2" is white, it indicates that the file management application currently displays the tab page 13 corresponding to the tab "Common file 1".

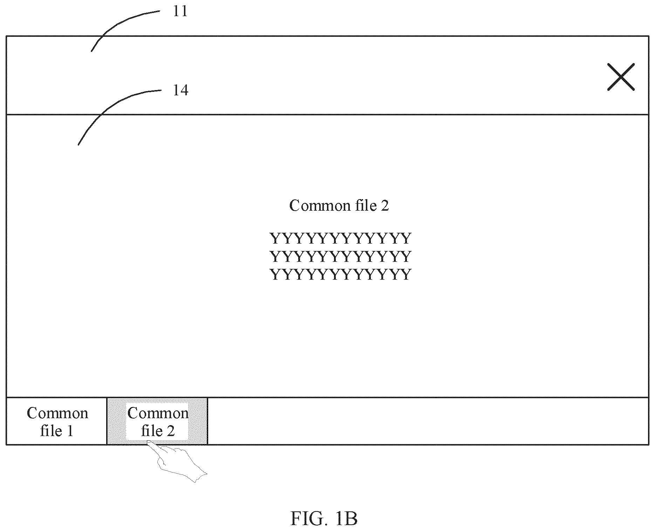

A user may perform an operation on a tab in the tab area 12, for example, tap different tabs to switch between tab pages and files corresponding to the different tabs for display. For example, as shown in FIG. 1A, the file management application currently displays the tab page 13 corresponding to the tab "Common file 1". The user taps the tab "Common file 2" to switch to a common file 2 for display. Correspondingly, as shown in FIG. 1B, in response to an operation of tapping the tab "Common file 2" by the user, the terminal device displays, in the display window 11, a tab page 14 corresponding to the tab "Common file 2", and displays the common file 2 on the tab page 14. The terminal device changes display states of the tab "Common file 1" and the tab "Common file 2". That is, the background color of the tab "Common file 1" changes to white, and the background color of the tab "Common file 2" changes to gray.

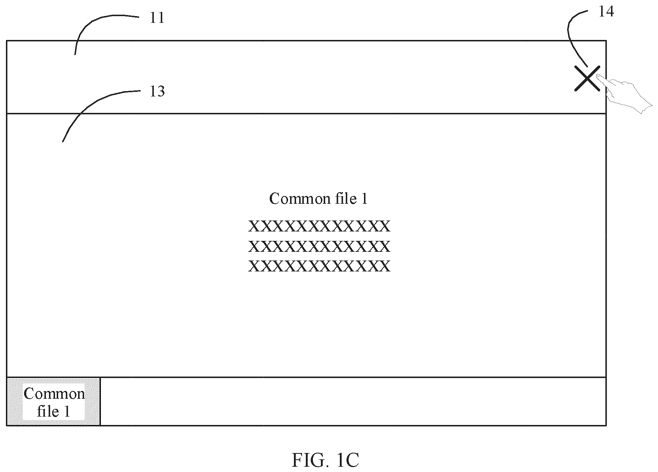

The user may perform an operation on a tab in the tab area 12, for example, double-tap the tab, to close a tab page and a file that correspond to the tab. For example, as shown in FIG. 1B, the user double-taps the tab "Common file 2", to close the common file 2. Correspondingly, as shown in FIG. 1C, in response to the operation of double-tapping the tab "Common file 2" by the user, the terminal device closes the tab "Common file 2" in the tab area 12, and closes, in the display window 11, the tab page 14 corresponding to the tab "Common file 2", to close the common file 2. Optionally, the terminal device may display a tab page and a file that correspond to a tab adjacent to the tab "Common file 2". For example, in FIG. 1C, after the common file 2 is closed, the file management application displays the tab page 13 corresponding to the tab "Common file 1". The terminal device changes the display state of the tab "Common file 1". That is, the background color of the tab "Common file 1" changes from white to gray.

The user may further perform a related operation on the display window 11 of the file management application, to move a location of the display window 11, change a size of the display window 11, or close the file management application. For example, as shown in FIG. 1C, the display window 11 includes a close control 14. The user taps the close control 14 to close the file management application. Correspondingly, in response to the operation of tapping the close control 14 by the user, the terminal device closes the display window 11, and ends running of the file management application.

It should be noted that the foregoing user operation is merely an example, and an implementation of the user operation is not limited in embodiments of this application.

In related technologies, a sandbox (sandbox) technology is used to protect a confidential file. A display application of the confidential file and a display application of a common file are two independent instances, and are two independent file management applications in terms of user experience. The sandbox is also referred to as a sand table, and may be understood as creating an independent virtual running environment similar to a sandbox, and allowing an application to run in the sand table environment. The sandbox technology enables applications to run in an isolated space, to prevent the applications from causing permanent changes to other programs and data in a computer.

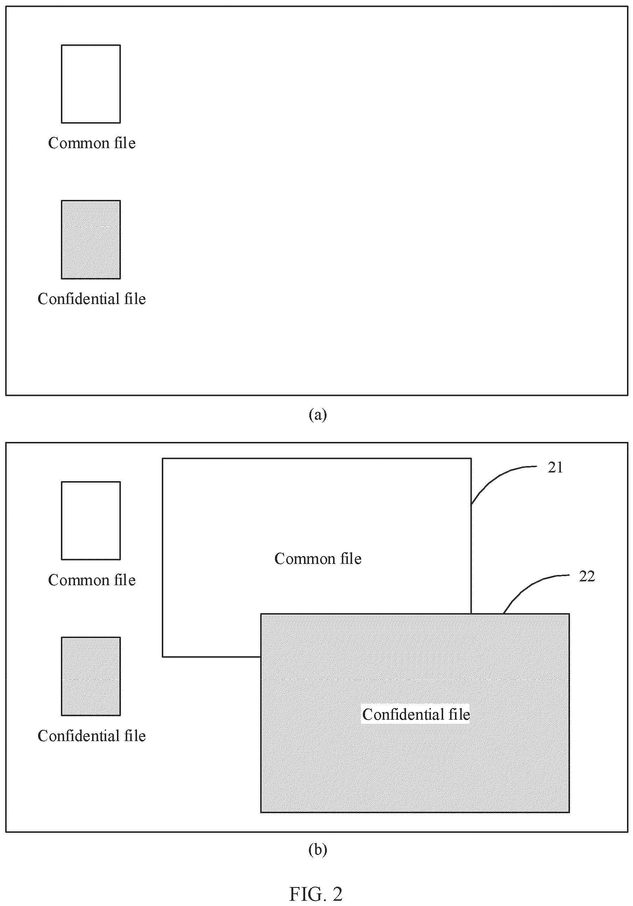

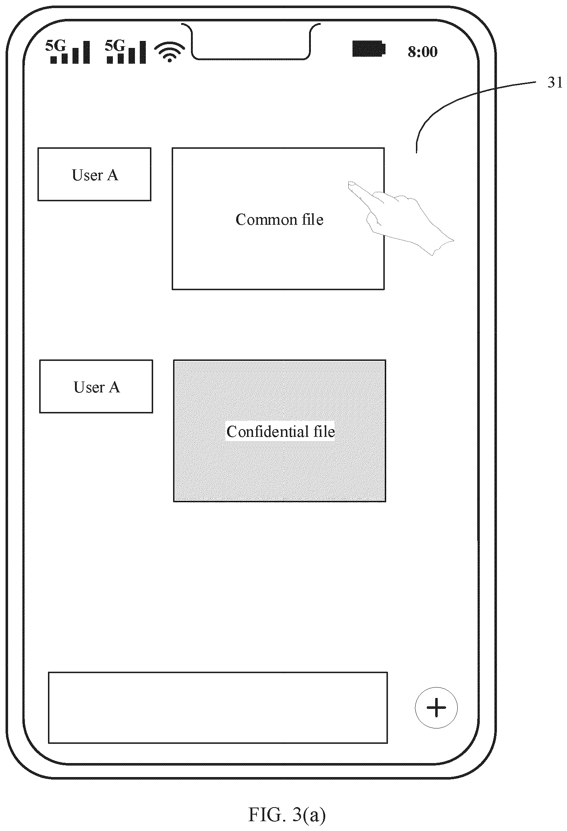

With reference to FIG. 2 and FIG. 3(a) to FIG. 3(d), the following describes display effect of a confidential file and a common file in related technologies by using examples. However, FIG. 2 and FIG. 3(a) to FIG. 3(d) do not constitute any limitation thereto.

In an example, as shown in FIG. 2, the terminal device is a computer. As shown in (a) in FIG. 2, there is a common file and a confidential file on a desktop of the computer. A user may double-tap the common file and the confidential file to open the files. Correspondingly, as shown in (b) in FIG. 2, in response to the operation of double-tapping the common file by the user, the computer displays the common file in a display window 21 of an application 1. In response to the operation of double-tapping the confidential file by the user, the computer displays the confidential file in a display window 22 of an application 2. Both the application 1 and the application 2 are applications for managing files. The user may obviously perceive that the application for managing the common file and the application for managing the confidential file are different applications.

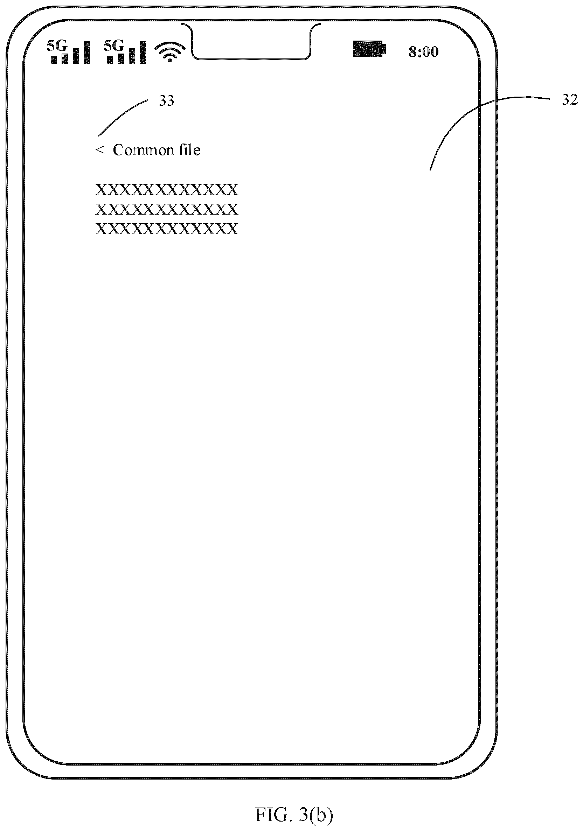

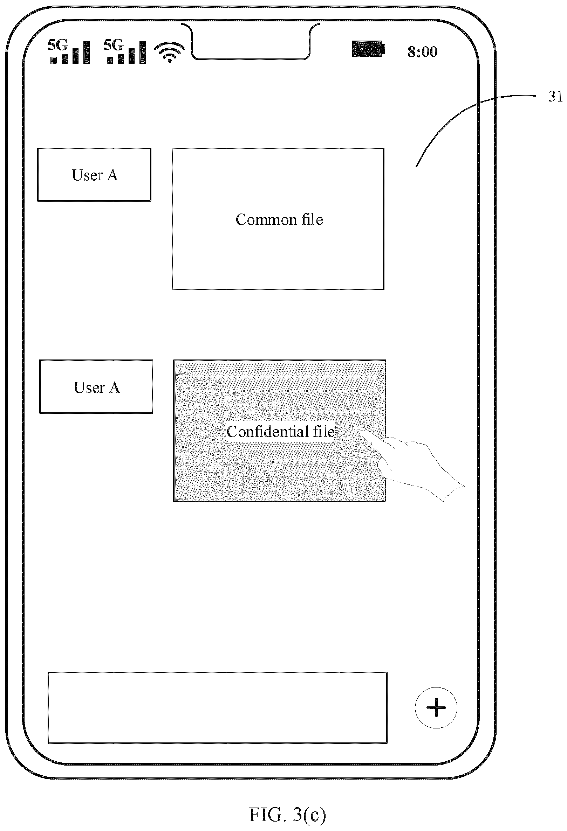

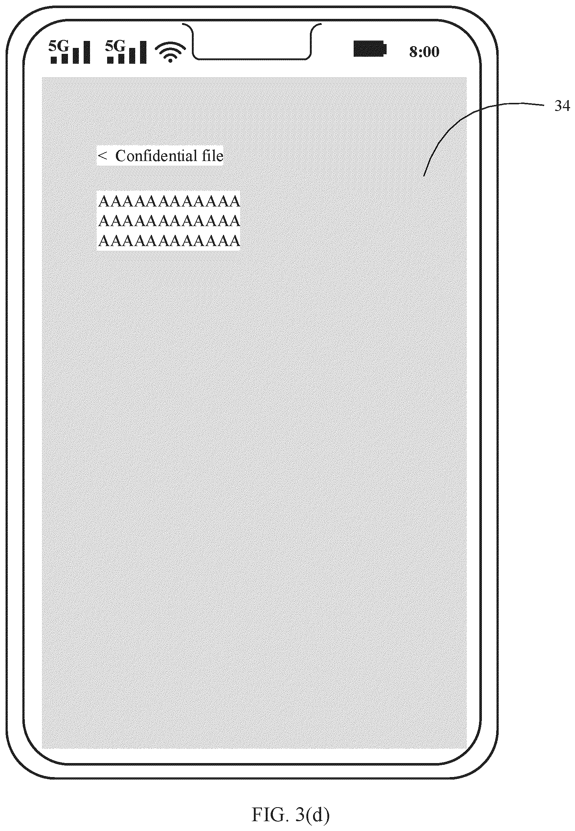

In another example, as shown in FIG. 3(a) to FIG. 3(d), the terminal device is a mobile phone. As shown in FIG. 3(a), the mobile phone currently displays an interface 31 of chat software. A user A sends two files, including a common file and a confidential file. The user taps the common file. Correspondingly, as shown in FIG. 3(b), in response to an operation of tapping the common file by the user, the mobile phone displays the common file in a display window 32 of an application 1. The display window 32 further includes a return control 33. The user may return to the interface 31 of the chat software by tapping the return control 33. As shown in FIG. 3(c), the user taps the confidential file. Correspondingly, as shown in FIG. 3(d), in response to an operation of tapping the confidential file by the user, the mobile phone displays the confidential file in a display window 34 of an application 2. Both the application 1 and the application 2 are applications for managing files. The user may obviously perceive that the application for managing the common file and the application for managing the confidential file are different applications. In addition, the user needs to switch between the application 1 and the application 2 to switch between view of the common file and view of the confidential file. This is inconvenient to operate and causes a poor user experience.

This embodiment of this application provides a file management method. When a terminal device opens a file, if a file management application determines that the file is a confidential file that cannot be opened by the file management application, a data confidentiality module is triggered to run. The data confidentiality module creates a first window, and displays the confidential file in the first window. The first window is located in a display window of the file management application, and serves as a tab page in the file management application in terms of display effect. Although the confidential file is opened under control of the data confidentiality module, in terms of display effect and user experience, the user only perceives the file management application, but does not perceive the data confidentiality module. The user perceives that the file management application can open a common file and a confidential file. In addition, the user may conveniently switch between the common file and the confidential file in the same file management application in a tab page switching manner, thereby simplifying an operation of switching between the common file and the confidential file for display by the user, and improving user experience in viewing and operating a file.

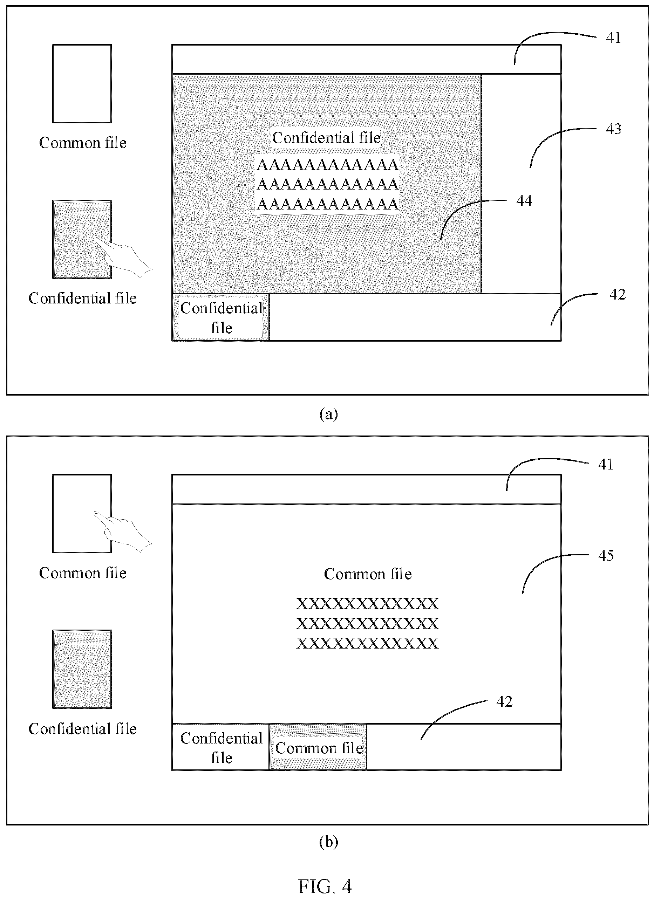

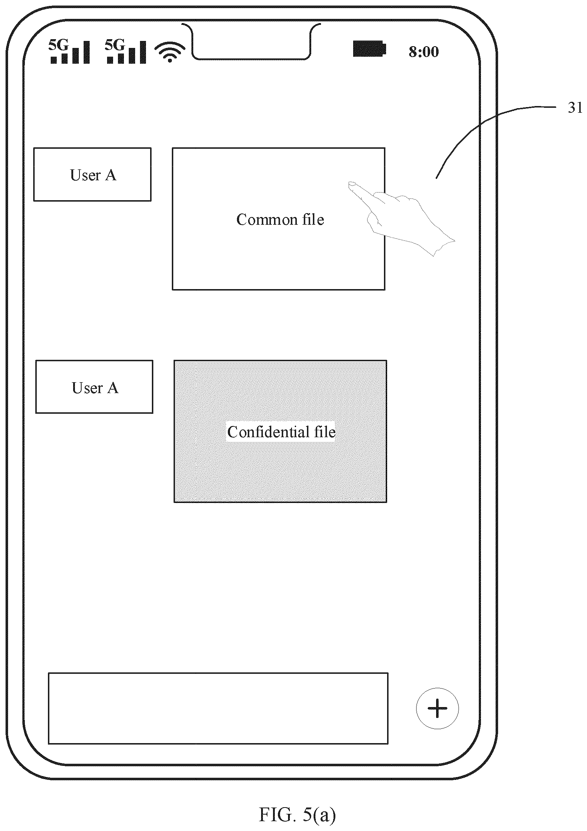

Compared with FIG. 2 and FIG. 3(a) to FIG. 3(d), the following describes display effect of a confidential file in the file management method provided in this embodiment of this application by using examples with reference to FIG. 4 and FIG. 5(a) to FIG. 5(d). However, FIG. 4 and FIG. 5(a) to FIG. 5(d) do not constitute any limitation thereto.

In an example, compared with FIG. 2, with reference to FIG. 4, the terminal device is a computer. As shown in (a) in FIG. 4, there is a common file and a confidential file on a desktop of the computer. A user double-taps the confidential file. Correspondingly, in response to the operation of double-tapping the confidential file by the user, the computer displays the confidential file in a display window 41 of a file management application. Specifically, the file management application creates and displays a tab page 43, corresponding to a tab "Confidential file" created in a tab area 42. Optionally, the tab page 43 is a blank tab page. A data confidentiality application creates a first window 44 in the display window 41 and at an upper layer of the display window 41, to display the confidential file. To facilitate distinguishing between the tab page 43 and the first window 44, in (a) in FIG. 4, for example, the first window 44 is filled with gray for representation. It should be understood that there may be no difference between display of the confidential file and display of the common file. Alternatively, the confidential file may be different from the common file in terms of a background; or a watermark may be added to the confidential file, to facilitate differentiation by the user. It may be learned that, although the confidential file is opened under control of the data confidentiality application, in terms of display effect, the confidential file is displayed on a tab page by the file management application. The user only perceives the file management application, but does not perceive the data confidentiality application. This improves user experience in viewing the confidential file.

Then, as shown in (b) in FIG. 4, the user continues to double-tap the common file. Correspondingly, the computer responds to the operation of double-tapping the common file by the user, and the file management application creates and displays a tab page 45, corresponding to a tab "Common file" created in the tab area 42, where the tab page 45 is used to display the common file. This process is a process in which an existing file management application opens a common file. In this scenario, the data confidentiality application receives indication information sent by the file management application, and hides the first window 44. It may be learned that when both the common file and the confidential file are opened, the user only perceives the file management application, thereby improving user experience in viewing the file.

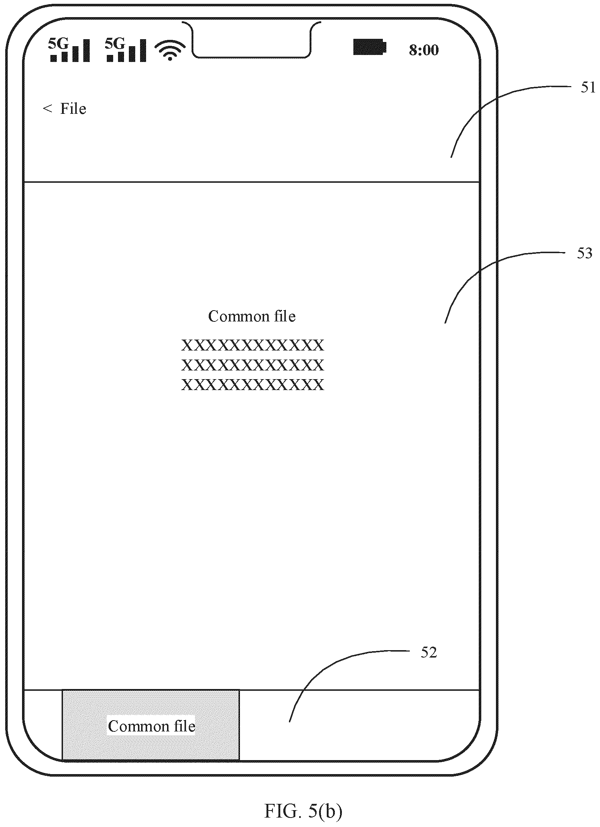

In another example, compared with FIG. 3(a) to FIG. 3(d), with reference to FIG. 5(a) to FIG. 5(d), the terminal device is a mobile phone. As shown in FIG. 5(a), the interface 31 of the chat software includes the common file and the confidential file that are sent by the user A. The user taps the common file. Correspondingly, as shown in FIG. 5(b), in response to the operation of tapping the common file by the user, the mobile phone creates and displays a tab page 53 in a display window 51 of a file management application, and displays the common file on the tab page 53. This process is a process in which an existing file management application opens a common file.

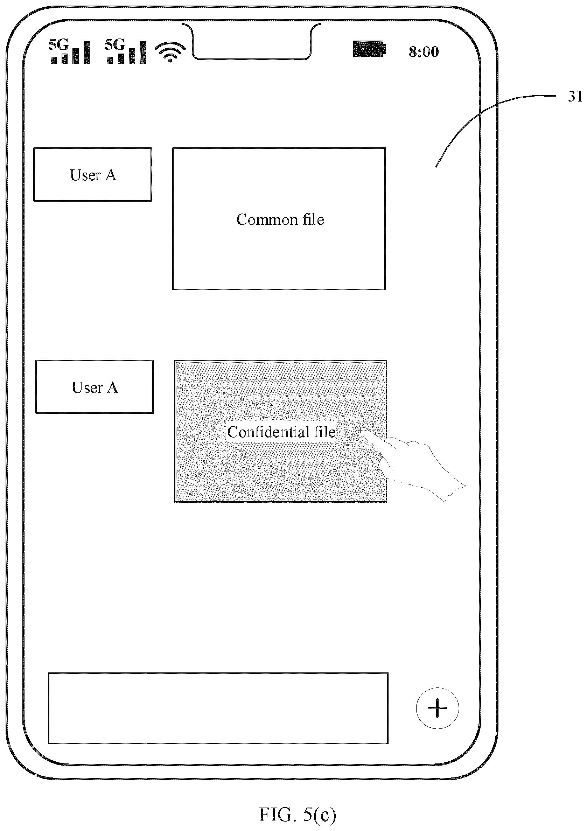

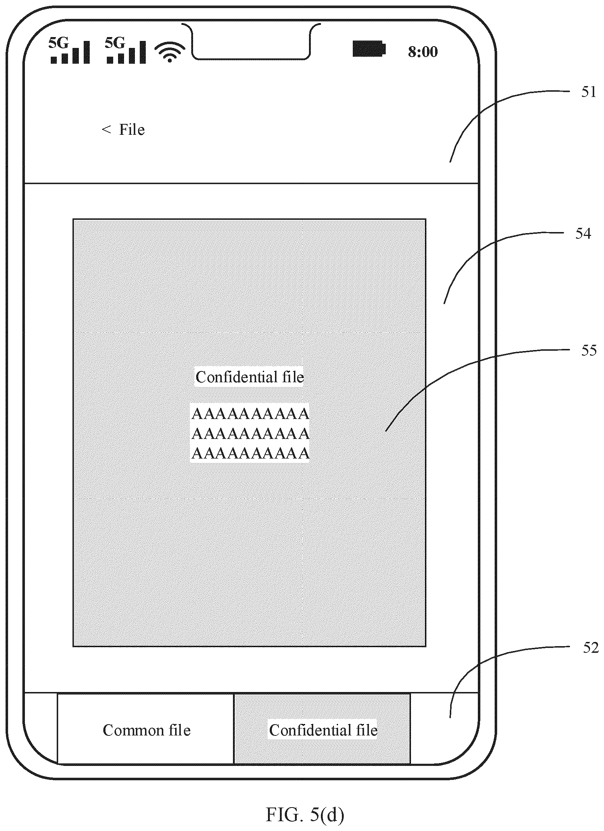

Then, as shown in FIG. 5(c), the user continues to tap the confidential file in the interface 31. Correspondingly, as shown in FIG. 5(d), in response to the operation of tapping the confidential file by the user, the mobile phone creates and displays a tab page 54 in the display window 51 of the file management application. The tab page 54 corresponds to the tab "Confidential File" created in the tab area 42. Optionally, the tab page 54 may be a blank tab page. In this scenario, a data confidentiality application creates a first window 55 in the display window 51 and at an upper layer of the display window 51, to display the confidential file. To facilitate distinguishing between the tab page 54 and the first window 55, in FIG. 5(d), for example, the first window 55 is filled with gray for representation. The user only perceives the file management application, but does not perceive the data confidentiality application. This improves user experience in viewing the confidential file.

The following continues to describe related concepts in embodiments of this application.

### 1. Data confidentiality application, data loss prevention (data loss prevention, DLP), and DLP application

In embodiments of this application, an application that controls display of a confidential file is referred to as a data confidentiality application or a data confidentiality app. Optionally, the data confidentiality application may be a system application on the terminal device.

For ease of description, in embodiments of this application, an example in which an encryption technology used for the confidential file is DLP is used for description. Correspondingly, the data confidentiality application is referred to as a DLP application. DLP, also referred to as data loss prevention or data loss protection, protects data or information assets by using a specific technical means, and can be applied to document encryption, database encryption, disk encryption, database firewall, and the like.

### 2. First window

A first window is a window that is created by a data confidentiality application and that is used to display a confidential file. Refer to related examples in FIG. 4 and FIG. 5(a) to FIG. 5(d), FIG. 8A to FIG. 8H, and FIG. 9A to FIG. 9D.

When the confidential file needs to be displayed, the first window is displayed in a display window of a file management application and is located at an upper layer of the display window. A size of the first window is less than a size of the display window. Optionally, to achieve good display effect, the first window is located in a data area in the display window, and the size of the first window is less than or equal to a size of the data area. When a location or the size of the display window of the file management application changes, the first window may adaptively adjust a location and the size, to achieve effect that the first window is bound to the display window of the file management application and changes accordingly.

When the confidential file does not need to be displayed, the data confidentiality application may hide the first window.

It may be learned that, the first window is created by using the data confidentiality application, and the first window is bound to the display window of the file management application for display, so that the user perceives only one file management application, but does not perceive the data confidentiality application. For the user, a common file and the confidential file are opened by using different tab pages of the file management application, thereby improving user experience in viewing and operating the confidential file.

In some implementations, location and size information of the first window may be configured by the file management application. The location and the size of the first window are configured by the file management application, so that display effect of the first window following the file management application can be improved.

In some implementations, the location and size information of the first window may be determined by a data encryption application based on location and size information of the display window of the file management application.

### 3. Software development kit (software development kit, SDK) and data confidentiality kit

An SDK is a collection of development tools used by a software engineer to develop application software for specific software packages, software frameworks, hardware platforms, operating systems, and the like. In a broad sense, an SDK is a collection of files, examples, and tools that assist in developing a type of software. The SDK may provide an interface for an application to invoke, to implement a specific function.

In embodiments of this application, a data confidentiality kit is introduced. The data confidentiality kit may include an interface for a file management application and a data confidentiality application to invoke, to implement the following functions: verifying a confidential file, launching the data confidentiality application, monitoring a location and a size of a display window of the file management application, and notifying a monitoring result to the data confidentiality application.

A name of the data confidentiality kit is not limited in embodiments of this application. For example, when the confidential file is encrypted by using DLP, the data confidentiality kit may be referred to as a DLP client.

A name and an implementation of the interface are not limited in embodiments of this application. Optionally, the interface may include at least one of the following: a function interface, an application programming interface (application programming interface, API), or an executable command. Optionally, the interface may include a location and size monitoring interface, configured to monitor a location and a size of a display window of the file management application.

In some implementations, the data confidentiality kit may be integrated into the SDK.

The following describes a software architecture of the terminal device.

A software system of the terminal device may use a layered architecture, an event-driven architecture, a micro kernel architecture, a micro service architecture, or a cloud architecture. In embodiments of this application, an Android system with a layered architecture is used as an example to describe a software structure of the terminal device. In a layered architecture, software is divided into several layers, and each layer has a clear role and task. The layers communicate with each other through a software interface.

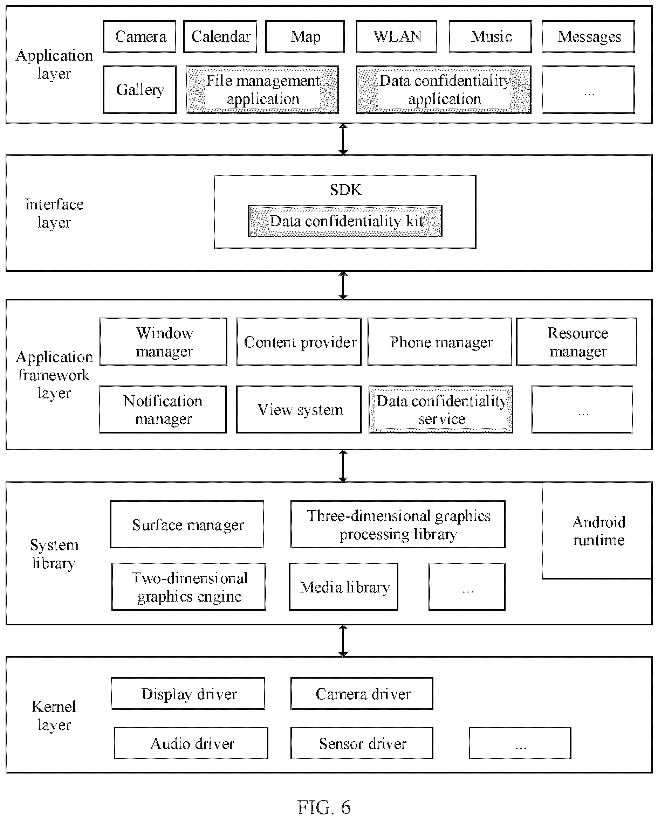

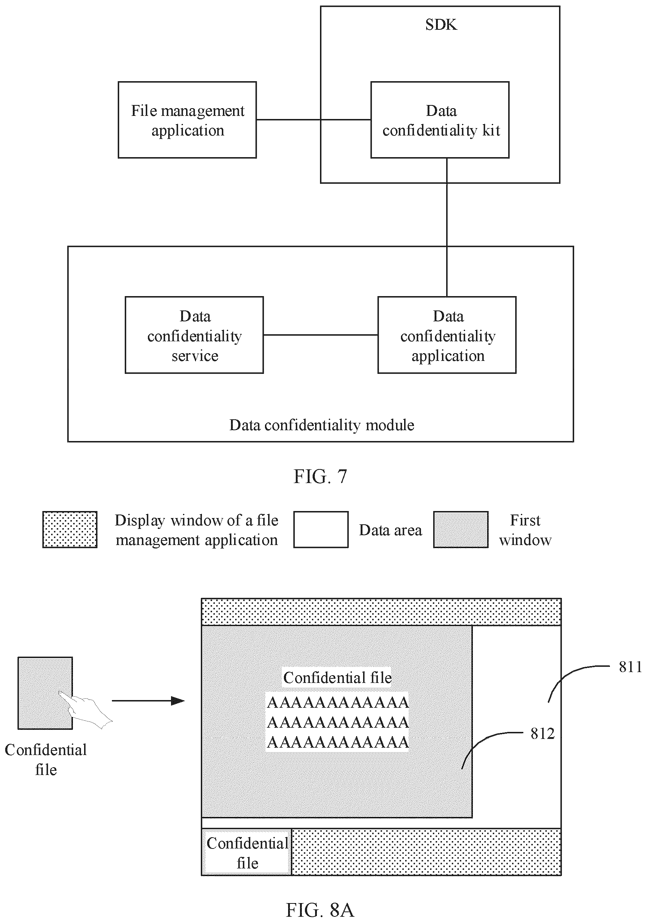

For example, FIG. 6 is a diagram of a structure of the software architecture of the terminal device according to an embodiment of this application, and FIG. 7 is a diagram of another structure of the software architecture of the terminal device according to an embodiment of this application.

As shown in FIG. 6 and FIG. 7, in some embodiments, the Android system is divided into five layers: an application layer, an interface layer, an application framework layer, a system library, and a kernel layer from top to bottom. Optionally, in some embodiments, the application framework layer may include an interface layer.

The application layer may include a series of application packages.

The application package is also referred to as an application, for example, an application like Camera, Calendar, Map, a wireless local area network (wireless local area network, WLAN), Music, Messages, or Gallery.

In embodiments of this application, as shown in FIG. 6 and FIG. 7, the application layer further includes a file management application and a data confidentiality application. The file management application is configured to manage a common file, for example, open the common file, close the common file, or switch between different files for display in a tab switching manner. The data confidentiality application is configured to manage a confidential file, for example, parse the confidential file for display, create a first window at an upper layer of a display window of the file management application when the confidential file needs to be displayed, hide the first window when the confidential file does not need to be displayed, or update a location and a size of the first window in real time based on a real-time monitoring result of a location and a size of the display window of the file management application.

The file management application and the data confidentiality application are executed by using different processes. For example, the file management application is executed by using a process 1, and the data confidentiality application is executed by using a process 2. The file management application and the data confidentiality application are separately executed by using different processes, so that the different processes have little impact on each other, thereby ensuring security of the confidential file. In addition, when a process is closed due to an exception, processing of another process is not affected.

The interface layer, including an SDK, is an interface opened by an operating system to an app, and is used by the app to invoke a related interface to implement a specific function.

In embodiments of this application, the SDK may include a data confidentiality kit. For the data confidentiality kit, refer to the concept descriptions above. Details are not described herein again.

The application framework layer may include a window manager, a content provider, a phone manager, a resource manager, a notification manager, a view system, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The phone manager is configured to provide a communication function of the terminal device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message that may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, a prompt tone is played, the terminal device vibrates, or an indicator light blinks.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

In embodiments of this application, the application framework layer further includes a data confidentiality service. The data confidentiality service is used to perform user credential verification on the confidential file and confirm whether a user has a permission to open confidential file. Optionally, the data confidentiality service is a system service.

The data confidentiality application and the data confidentiality service are executed by using different processes. For example, the data confidentiality application is executed by using the process 2, and the data confidentiality service is executed by using a process 3. The data confidentiality application and data confidentiality service are executed by using different processes, so that the different processes have little impact on each other. When a process is closed due to an exception, processing of another processes is not affected.

In some implementations, the data confidentiality application and the data confidentiality service may alternatively be executed by using one process.

The system library includes a kernel library and a virtual machine. The system library is responsible for scheduling and managing the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a three-dimensional graphics processing library (for example, OpenGL ES), a two-dimensional graphics engine (for example, SGL), and a media library (Media Libraries).

The surface manager is configured to manage a display subsystem and provide a fusion of two-dimensional and three-dimensional layers for a plurality of applications.

The three-dimensional graphics processing library is configured to implement three-dimensional graphics drawing, image rendering, composition, layer processing, and the like.

The two-dimensional graphics engine is a drawing engine for two-dimensional drawing.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The kernel layer is a layer between hardware and software. The kernel layer includes at least a display driver, a camera driver, an audio driver, and a sensor driver.

With reference to FIG. 8A to FIG. 8H, the following describes application scenarios to which embodiments of this application are applicable and file display effect by using examples. However, FIG. 8A to FIG. 8H do not constitute any limitation thereto. For ease of distinguishing, a display window of a file management application is filled with points for representation, a data area is filled with white for representation, and a first window is filled with gray for representation. If a background color of a tab is gray, it indicates that the file management application currently displays a tab page corresponding to the tab. A data confidentiality application is a DLP application.

For example, in a first example, a user opens a confidential file without opening any common files or confidential files before.

As shown in FIG. 8A, the user opens the confidential file. The file management application establishes and displays a tab page 811 that corresponds to a tab "Confidential file". The DLP application establishes a first window 812, and displays the confidential file in the first window 812.

For example, in a second example, the user first opens a confidential file, and then opens a common file.

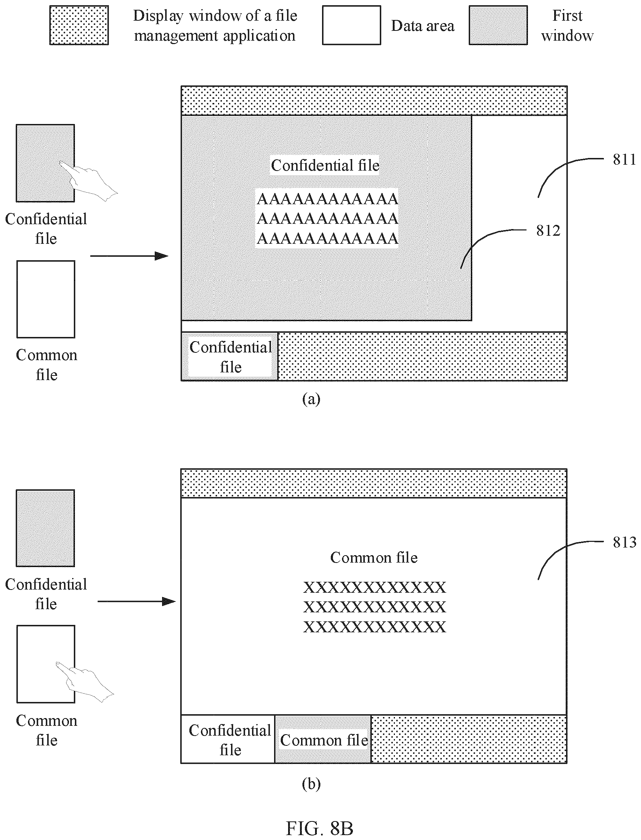

As shown in (a) in FIG. 8B, the user opens the confidential file. The file management application establishes and displays a tab page 811 that corresponds to a tab "Confidential file". The DLP application establishes a first window 812, and displays the confidential file in the first window 812. Then, as shown in (b) in FIG. 8B, the user opens the common file. The file management application notifies the DLP application to hide the first window 812. The file management application establishes and displays a tab page 813 that corresponds to a tab "Common file", and displays a common file in the tab page 813.

For example, in a third example, the user first opens a confidential file A, and then opens a confidential file B.

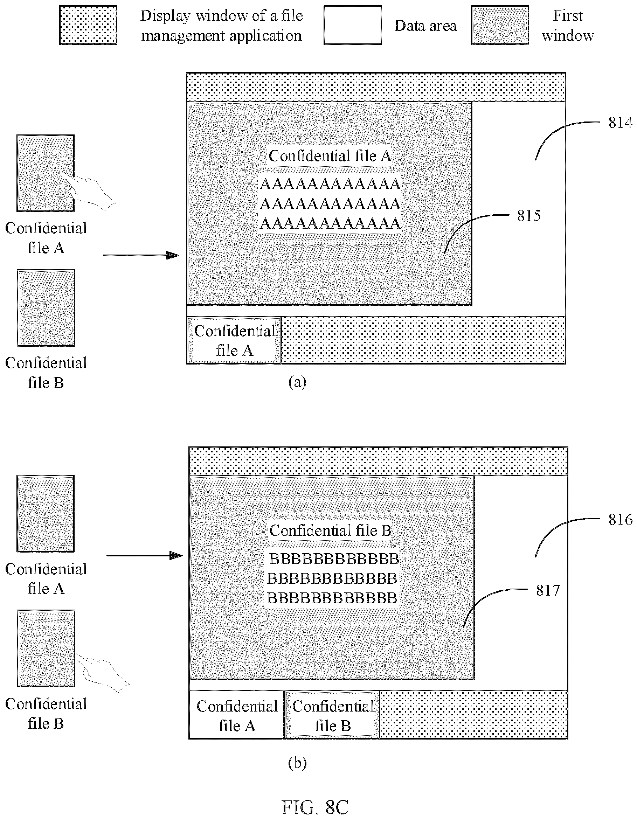

As shown in (a) in FIG. 8C, the user opens the confidential file A. The file management application establishes and displays a tab page 814 that corresponds to a tab "Confidential file A". The DLP application establishes a first window 815, and displays the confidential file A in the first window 815. Then, as shown in (b) in FIG. 8C, the user opens the confidential file B. The file management application notifies the DLP application to hide the first window 815. The file management application establishes and displays a tab page 816 that corresponds to a tab "Confidential file B". The DLP application establishes a first window 817, and displays the confidential file B in the first window 817.

For example, in a fourth example, the user first opens a common file, and then opens a confidential file.

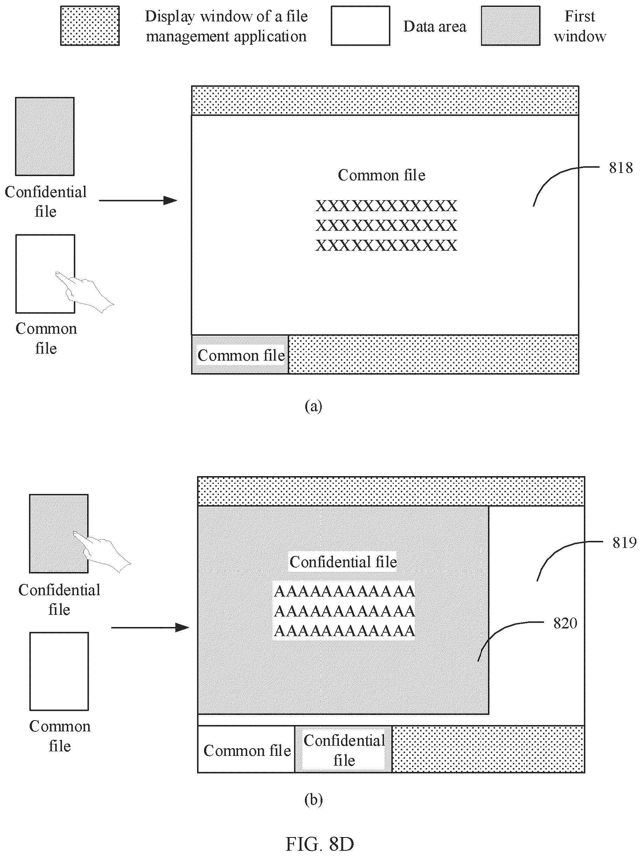

As shown in (a) in FIG. 8D, the user opens the common file. The file management application establishes and displays a tab page 818 that corresponds to a tab "Common file", and displays the common file in the tab page 818. Then, as shown in (b) in FIG. 8D, the user opens the confidential file. The file management application establishes and displays a tab page 819 that corresponds to a tab "Confidential file". The DLP application establishes a first window 820, and displays the confidential file in the first window 820.

For example, in a fifth example, the user already opens a common file and a confidential file, and the confidential file is currently displayed. The user switches from display of the confidential file to display of the common file by performing a tab page switching operation.

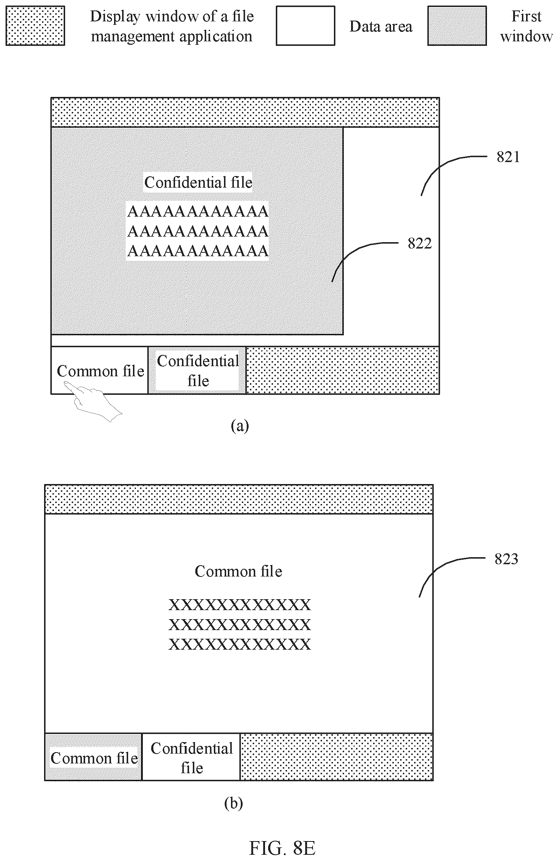

As shown in (a) in FIG. 8E, the file management application currently displays a tab page 821 corresponding to a tab "Confidential file". The DLP application controls display of a first window 822, and the confidential file is displayed in the first window 822. The user taps a tab "Common file" to switch to the common file for display. Correspondingly, as shown in (b) in FIG. 8E, the file management application notifies the DLP application to hide the first window 822. The file management application switches the tab page 821 to a tab page 823, and displays the common file on the tab page 823.

For example, in a sixth example, the user already opens a common file and a confidential file, and the common file is currently displayed. The user switches from display of the common file to display of the confidential file by performing a tab page switching operation.

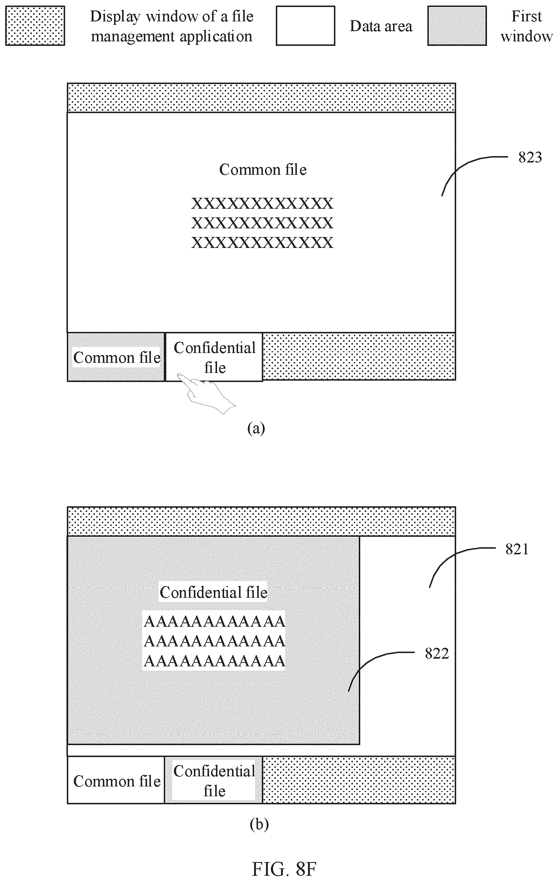

As shown in (a) in FIG. 8F, the file management application currently displays the tab page 823 corresponding to the tab "Common file". The user taps the tab "Confidential file" to switch to the confidential file for display. Correspondingly, as shown in (b) in FIG. 8F, the file management application notifies the DLP application to display the first window 822 corresponding to the confidential file. The DLP application obtains latest location and size information of the first window 822, and displays the first window 822. The file management application switches the tab page 823 to the tab page 821.

For example, in a seventh example, the user already opens the confidential file A and the confidential file B, and the confidential file A is currently displayed. The user switches from display of the confidential file A to display of the confidential file B by performing a tab page switching operation.

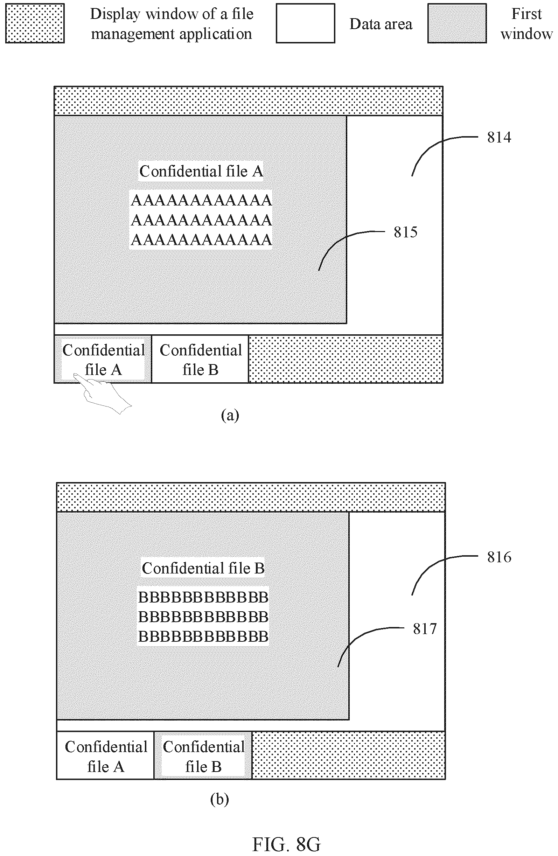

As shown in (a) in FIG. 8G, the file management application currently displays the tab page 814 corresponding to the tab "Confidential file A". The DLP application controls display of the first window 815 corresponding to the confidential file A, and the confidential file A is displayed in the first window 815. The user taps the tab "Confidential file B" to switch to the confidential file B for display. Correspondingly, as shown in (b) in FIG. 8G, the file management application notifies the DLP application to hide the first window 815 corresponding to the confidential file A, and notifies the DLP application to display the first window 817 corresponding to the confidential file B. The DLP application obtains latest location and size information of the first window 817 corresponding to the confidential file B, displays the first window 817, and displays the confidential file B in the first window 817. The file management application switches the tab page 814 to the tab page 816.

For example, in an eighth example, the user already opens a common file and a confidential file, and the confidential file is currently displayed. The user closes the confidential file by closing a tab page.

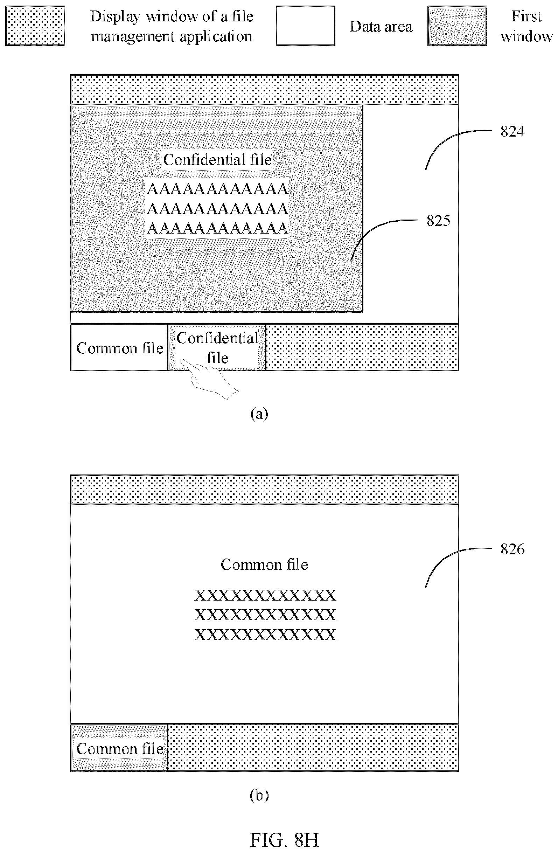

As shown in (a) in FIG. 8H, the file management application currently displays a tab page 824 corresponding to a tab "Confidential file". The DLP application controls display of a first window 825, and the confidential file is displayed in the first window 825. The user double-taps the tab "Confidential file" to close the confidential file. Correspondingly, as shown in (b) in FIG. 8H, the file management application notifies the DLP application to close the first window 825. The file management application closes the tab "Confidential file" and the tab page 824, and displays a tab page 826, to display the common file adjacent to the tab "Confidential file" after the confidential file is closed.

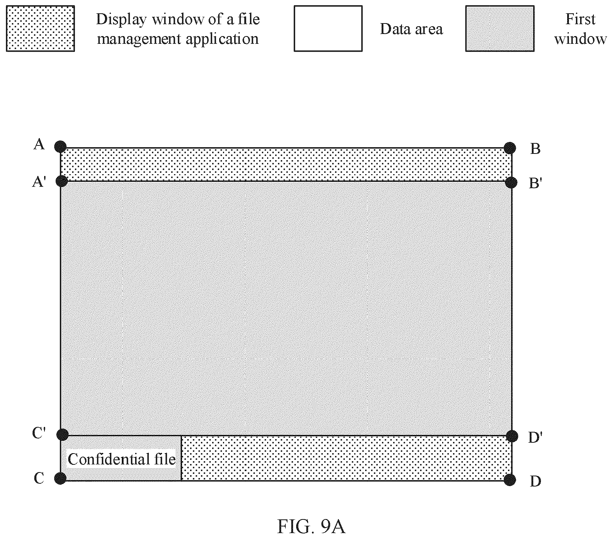

With reference to FIG. 9A to FIG. 9D, the following describes locations and sizes of a first window, a display window of a file management application, and a data area. For ease of distinguishing, the display window of the file management application is filled with points for representation, the data area is filled with white for representation, and the first window is filled with gray for representation. Boundary reference points of the display window of the file management application are represented as A, B, C, and D. Boundary reference points of the first window are represented as A', B', C', and D'.

To achieve display effect of a confidential file in the file management application, the first window needs to be located in an area of the display window of the file management application, and the size of the first window is less than the size of the display window. Optionally, to further improve the display effect of the confidential file, the first window needs to be located in an area of the data area in the display window, and the size of the first window is less than the size of the data area.

In some implementations, location and size information of the first window is configured by the file management application, or is determined by a data encryption application.

In some implementations, the location and size information of the first window is determined based on location and size information of the display window of the file management application, or is determined based on location and size information of the data area.

The location and size information of the display window of the file management application may include coordinates of the reference points A, B, C, and D, or include coordinates of a preset reference point and a length and a width of the display window. For example, the preset reference point may be the reference point A.

The location and size information of the first window may include coordinates of the reference points A', B', C', and D', or include coordinates of a preset reference point and a length and a width of the first window. For example, the preset reference point may be the reference point A'.

For example, FIG. 9A to FIG. 9D show different locations and sizes of the first window in the display window.

In FIG. 9A, the first window coincides with the data area.

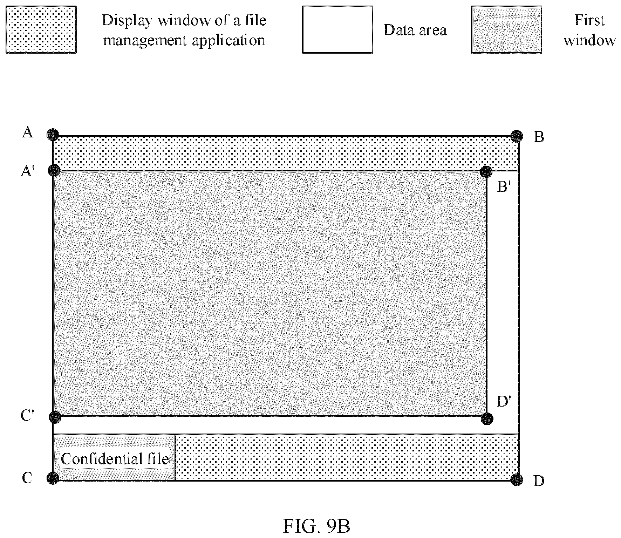

In FIG. 9B, there is a spacing between two adjacent edges of the first window and two corresponding edges of the data area.

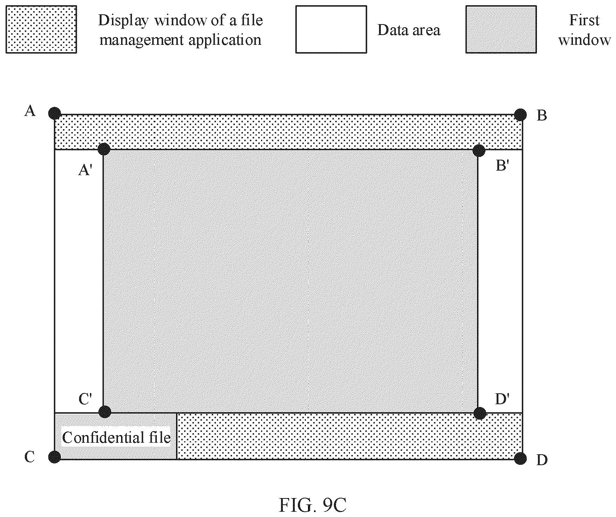

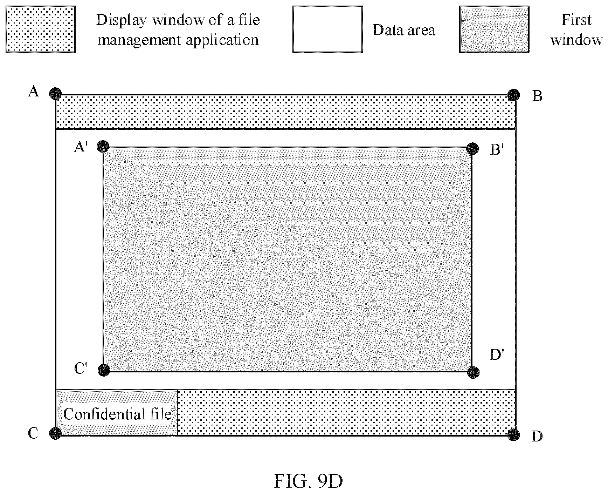

In FIG. 9C and FIG. 9D, there is a spacing between two opposite edges of the first window and two corresponding edges of the data area.

It should be noted that a value of the spacing in FIG. 9B to FIG. 9D is not limited in embodiments of this application.

The following describes in detail technical solutions of this application by using specific embodiments.

In embodiments of this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing implementations of this application are not intended to limit the protection scope of this application. Steps in each embodiment may be partially performed (for example, the terminal device may not perform the steps performed by the terminal device in the foregoing embodiments). An execution sequence of different steps can be changed. Embodiments described in this specification may be combined with other embodiments, and steps of different embodiments in this specification may also be combined.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment.

In embodiments of this application, terms such as "example" and "for example" are used to represent giving an example, an illustration, or a description. Any embodiment or design scheme described as an "example" in this application should not be explained as being more preferred or having more advantages than another embodiment or design scheme. To be precise, the term "example" is used to present a concept in a specific manner.

In embodiments of this application, terms such as "first" and "second" are used to distinguish between same items or similar items that provide basically same functions and effect. Persons skilled in the art may understand that the terms such as "first" and "second" do not limit a quantity or an execution sequence, and the terms such as "first" and "second" do not indicate a definite difference.

In embodiments of this application, as shown in FIG. 7, the terminal device includes the file management application, the data confidentiality module, and the data confidentiality kit. The data confidentiality module includes the data confidentiality application and the data confidentiality service. To facilitate understanding of this solution, embodiments of this application are described by using an example in which the confidential file uses a DLP technology, the data confidentiality application is a DLP application, the data confidentiality service is a DLP service, and the data confidentiality kit is a DLP client.

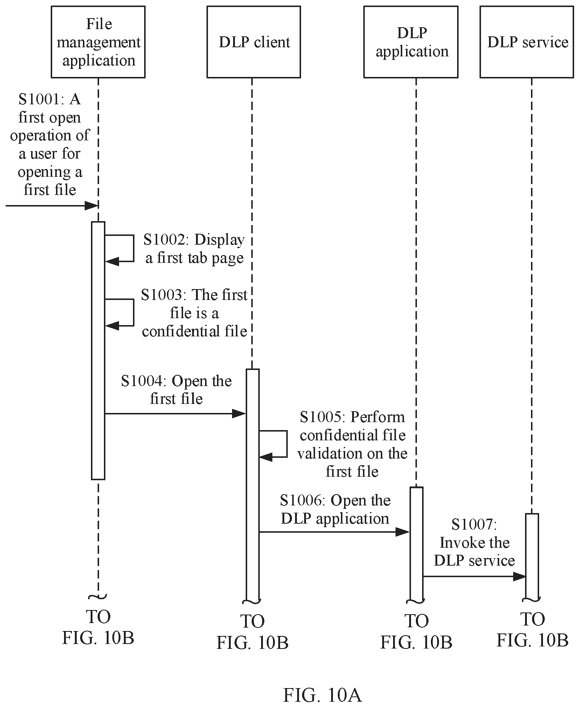

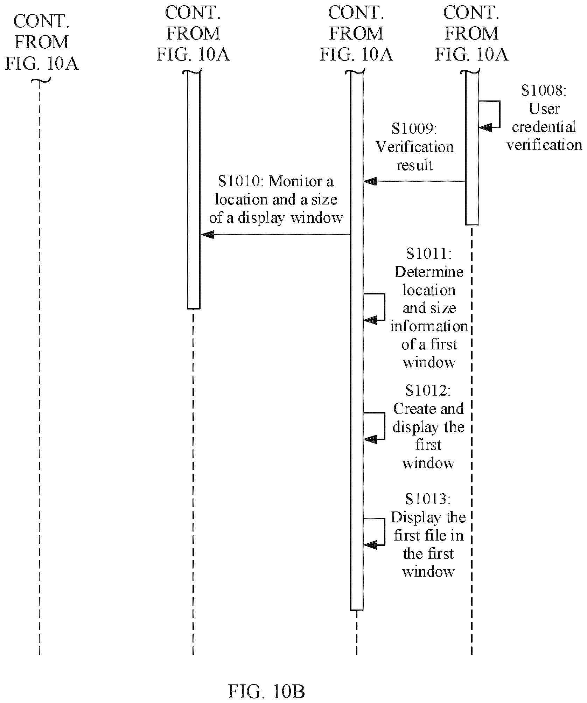

FIG. 10A and FIG. 10B are a flowchart of a file management method according to an embodiment of this application. The file management method provided in this embodiment is performed by a terminal device, and is applicable to a scenario in which the terminal device opens a file, for example, the scenarios shown in FIG. 8A to FIG. 8D. As shown in FIG. 10A and FIG. 10B, the file management method provided in this embodiment may include the following steps.

S1001: The terminal device receives a first open operation of a user for opening a first file.

The first open operation is not limited in this embodiment. For example, the first open operation may be any one of the following: a tap operation, a touch operation, or a voice control operation.

S1002: In response to the first open operation, run a file management application, and display a first tab page in a display window of the file management application.

S1003: The file management application determines that the first file is a confidential file.

The first file may be a confidential file, or may be a common file. If the file management application determines that the first file is a common file, for example, in the scenario shown in (a) in FIG. 8D, the first file may be directly opened by the file management application, and displayed on the first tab page. If the file management application determines that the first file is a confidential file and cannot be opened by the file management application, for example, in the scenario shown in (b) in FIG. 8A or FIG. 8D, S1004 continues to be performed.

When the first file is a confidential file, the first tab page may be a blank tab page.

In an implementation, the file management application determines, based on a file type of the first file, that the first file is a confidential file. For example, if a name extension of the first file is .dlp, it indicates that the first file is a DLP file that cannot be opened by the file management application.

In another implementation, the file management application may parse a file header of the first file, and determine that the first file is a confidential file.

It should be noted that an execution sequence of S1002 and S1003 is not limited in this embodiment.

S 1004: When opening the first file, the file management application performs confidential file verification on the first file through a first interface provided by a DLP client.

In S1003, the file management application preliminarily determines that the first file is a confidential file, but a determining result is not necessarily accurate. For example, when the user modifies the name extension of the first file to .dlp, the file management application mistakenly considers that the first file is a DLP file, but actually, the first file is not a DLP file. Therefore, when the file management application opens the first file, a system service invokes the first interface provided by the DLP client, and performs confidential file verification on the first file by executing the first interface. This improves accuracy of determining that the first file is a confidential file.

The first interface is configured to perform confidential file verification on the file to determine whether the first file is a true confidential file.

S1005: The DLP client performs confidential file verification on the first file, and determines whether the verification succeeds.

Specifically, the first interface is invoked and executed to determine whether the confidential file verification on the first file succeeds.

If the verification succeeds, it indicates that the first file is indeed a DLP file encrypted by using a DLP technology, and S1006 continues to be performed.

If the verification fails, it indicates that the first file is not a true DLP file encrypted by using a DLP technology, and the process may be ended.

S 1006: When the confidential file verification succeeds, the DLP client opens a DLP application.

When the first file is a DLP file, to ensure that the first file still has a data loss prevention capability, the DLP application is launched, and the DLP application is requested to open the first file. Correspondingly, the DLP application obtains the first file, creates and displays a first window, and displays the first file in the first window. Specifically, S1010 to S1013 are performed. The first window is located in the first tab page and is located at an upper layer of the display window of the file management application.

S1010: The DLP application monitors a location and a size of the display window, to obtain a monitoring result.

In some implementations, the DLP application monitors the location and the size of the display window by invoking a second interface provided by the DLP client, to obtain the monitoring result.

The second interface is configured to: monitor the location and the size of the display window of the file management application, and notify the monitoring result to the DLP application.

For the monitoring result, in an implementation, the monitoring result includes a location and size configuration value that is set by the file management application for the first window.

In this implementation, the file management application sets a location and a size of the first window, so that the locations of the first window and the display window of the file management application are more appropriate, and display effect of displaying the confidential file in the first window is better.

For the monitoring result, in another implementation, the monitoring result includes location and size information of the display window. This implementation is easy to implement.

S1011: The DLP application determines location and size information of the first window based on the monitoring result.

If the monitoring result includes the location and size configuration value that is set by the file management application for the first window, the DLP application determines the location and size configuration value as the location and size information of the first window.

If the monitoring result includes the location and size information of the display window, the DLP application may determine the location and size information of the first window based on the location and size information of the display window.

For the location and size information of the first window and the location and size information of the display window of the file management application, refer to the related descriptions in FIG. 9A to FIG. 9D. Details are not described herein again.

S1012: The DLP application creates and displays the first window at the upper layer of the display window based on the location and size information of the first window.

S1013: The DLP application displays the first file in the first window.

Specifically, the DLP application decrypts the first file, and displays the decrypted first file in the first window.

It may be learned that, according to the file management method provided in this embodiment, when the terminal device opens a file, if the file management application determines that the file is a confidential file that cannot be opened by the file management application, a data confidentiality application is triggered to run, and the first file is processed and displayed by the data confidentiality application. The data confidentiality application creates the first window at the upper layer of the display window of the file management application, to display the confidential file. Because the confidential file is opened by the data confidentiality application and belongs to a process space different from the file management application, protection of the confidential file is ensured. In addition, although the confidential file is opened under control of the data confidentiality application, in terms of display effect and user experience, the confidential file is displayed as a tab page in the file management application, and the user perceives only the file management application, but does not perceive the data confidentiality application. Because the user can view a common file and a confidential file in the same file management application, user experience in viewing and operating a file is improved.

In some implementations, before the DLP application opens the first file, user credential verification needs to be performed on the first file. That is, before the DLP application monitors the location and the size of the display window, to obtain the monitoring result in S1010, the file management method provided in this embodiment may further include the following steps.

S1007: The DLP application invokes a DLP service.

S1008: The DLP service performs user credential verification on the first file, to obtain a user credential verification result. The user credential verification result indicates whether the user credential verification succeeds.

A user credential indicates an identity of the user. Whether the user has a permission to open the first file may be determined through the user credential verification. Optionally, the user credential may include at least one of the following: a user name, a user ID, a digital signature of the user, a password, or a domain name.

S 1009: The DLP service returns the user credential verification result to the DLP application.

In an implementation, S1009 is performed regardless of whether the user credential verification succeeds.

In another implementation, S1009 is performed when the user credential verification succeeds.

In still another implementation, S 1009 is performed when the user credential verification fails.

If the DLP application determines that the user credential verification succeeds, it indicates that the user has the permission to open the first file, and the DLP application may create the first window to display the first file. If the DLP application determines that the user credential verification fails, it indicates that the user does not have the permission to open the first file, and the process may be ended.

Security of opening the first file by the user is improved through the process of user credential verification.

The file management method provided in this embodiment may further include the following steps.

The DLP application monitors the location and the size of the display window in real time.

If the location or the size of the display window changes, the DLP application obtains location and size update information of the first window.

The DLP application updates and displays the first window at the upper layer of the display window based on the location and size update information.

In this implementation, after displaying the confidential file (the first file) in the first window, the DLP application needs to monitor the location and the size of the display window of the file management application in real time, to determine whether the location or the size of the display window changes. If the location or the size of the display window changes, to achieve effect of binding the first window to the display window, the location or the size of the first window also needs to change adaptively. For example, if the display window is moved to the left, the first window also needs to be moved to the left along with the display window. Therefore, the DLP application needs to re-determine the location and size update information of the first window, and update and display the first window at the upper layer of the display window based on the location and size update information.

That the DLP application monitors the location and the size of the display window in real time may include: The DLP application monitors the location and the size of the display window in real time by invoking the second interface provided by the DLP client, to obtain a real-time monitoring result.

In some implementations, if the location or the size of the display window does not change, the DLP client may not notify the real-time monitoring result to the DLP application. When the location or the size of the display window changes, the DLP client notifies the real-time monitoring result to the DLP application, so that the DLP application determines the location and size update information of the first window based on the real-time monitoring result.

For the real-time monitoring result, refer to the descriptions of the monitoring result in S1010. For that the DLP application obtains location and size update information of the first window, refer to the descriptions in S1011. A principle is similar, and details are not described herein again.

The file management method provided in this embodiment may further include the following steps.

The terminal device receives a second open operation of the user for opening a second file.

In response to the second open operation, the file management application displays a third tab page in the display window.

The file management application sends first indication information to the DLP application. The first indication information indicates to hide the first window.

The DLP application hides the first window based on the first indication information.

In this implementation, the user first opens the first file, and the first file is a confidential file. Then, the user opens the second file. Because the first file is displayed under the control of the DLP application, when the user opens the second file, the first file displayed in the first window needs to be hidden. The file management application sends the first indication information to the DLP application, so that the DLP application hides the first window based on the first indication information.

In some implementations, the file management application may send the first indication information to the DLP application through a third interface provided by the DLP client.

The second file may be a confidential file, or may be a common file. If the second file is a common file, for example, in the scenario shown in FIG. 8B, the second file may be directly opened by the file management application, and is displayed on the third tab page. If the second file is a confidential file, for example, in the scenario shown in (b) in FIG. 8C, the second file may be understood as a new first file, and S1001 to S1013 are performed.

The second open operation is not limited in this embodiment. For example, the second open operation may be any one of the following: a tap operation, a touch operation, or a voice control operation.

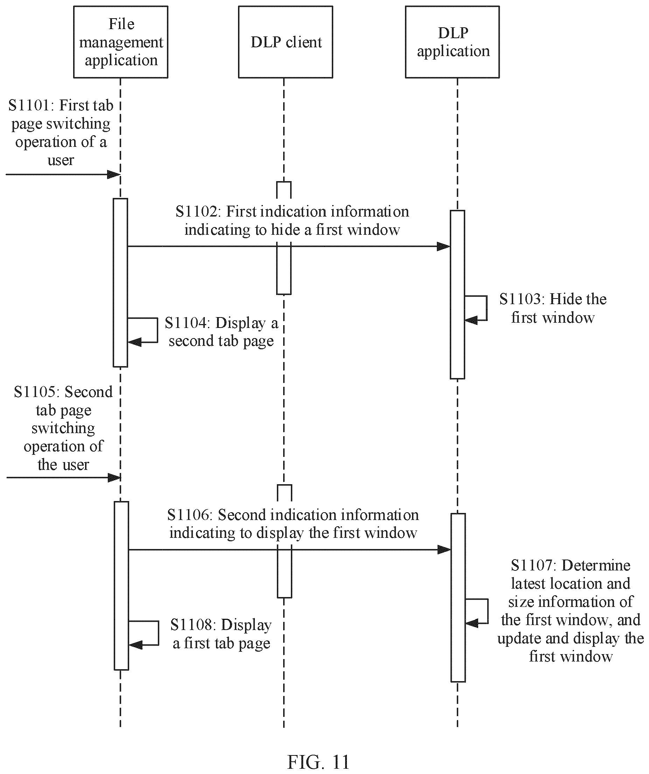

FIG. 11 is another flowchart of a file management method according to an embodiment of this application. The file management method provided in this embodiment is performed by a terminal device, and is applicable to a scenario in which a common file and a confidential file are switched for display, for example, the scenarios shown in FIG. 8E to FIG. 8G. It is assumed that the terminal device currently displays a confidential file (a first file) by using a first window, and the first window is located in a first tab page and is located at an upper layer of a display window of a file management application. The display window of the file management application includes the first tab page and a second tab page, and the first tab page is currently displayed. The first tab page corresponds to the first file, and the second tab page corresponds to a common file. As shown in FIG. 11, the file management method provided in this embodiment may include the following steps.

S1101: The terminal device receives a first tab page switching operation of a user, where the first tab page switching operation is used to switch from display of the first tab page to display of the second tab page.

The first tab page switching operation is not limited in this embodiment. For example, the first tab page switching operation may be any one of the following: a tap operation or a touch operation performed on a tab, or a voice control operation.

S1102: In response to the first tab page switching operation, the file management application sends first indication information to a DLP application. The first indication information indicates to hide the first window.

In some implementations, the file management application may send the first indication information to the DLP application through a third interface provided by a DLP client.

S1103: The DLP application hides the first window based on the first indication information.

S 1104: The file management application displays the second tab page.

In this implementation, the terminal device currently displays the confidential file (the first file), and the user switches from the confidential file to the common file, for example, the scenario shown in FIG. 8E. Because the first file is displayed under control of the DLP application, when the user switches to the common file for display, the first file displayed in the first window needs to be hidden. The file management application sends the first indication information to the DLP application, so that the DLP application hides the first window based on the first indication information.

The file management method provided in this embodiment may further include the following steps.

S 1105: The terminal device receives a second tab page switching operation of the user, where the second tab page switching operation is used to switch from display of the second tab page to display of the first tab page.

The second tab page switching operation is not limited in this embodiment. For example, the second tab page switching operation may be any one of the following: a tap operation or a touch operation performed on a tab, or a voice control operation.

S1106: In response to the second tab page switching operation, the file management application sends second indication information to the DLP application. The second indication information indicates to display the first window.

In some implementations, the file management application may send the second indication information to the DLP application through the third interface provided by the DLP client.

S 1107: The DLP application determines latest location and size information of the first window based on the second indication information, and updates and displays the first window at the upper layer of the display window based on the latest location and size information.

S 1108: The file management application displays the first tab page.

In this implementation, the terminal device currently displays the common file, and the user switches from the common file to the confidential file (the first file), for example, the scenario shown in FIG. 8F. Because the first file is displayed under the control of the DLP application, the first window corresponding to the first file is currently in a hidden state, and the DLP application needs to control to redisplay the first window. To ensure that a display location and a display size of the first window are correct, match the display window of the file application management, and achieve follow-up and binding display effect, the DLP application needs to determine the latest location and size information of the first window, and update and display the first window at the upper layer of the display window based on the latest location and size information.

For that the DLP application determines latest location and size information of the first window, refer to S1010 and S1011 in FIG. 10B. A principle is similar, and details are not described herein again.

In an implementation, if location and size information of the first window is configured by the file management application, the second indication information may include the latest location and size information of the first window.

In the scenario shown in FIG. 8G, both files switched for display are confidential files. In this case, for both the confidential file 1 and the confidential file 1, S1105 to S1107 are performed.

It may be learned that the file management method provided in this embodiment is applicable to a scenario in which different files are switched for display by switching tab pages. If the terminal device currently displays a confidential file, after the display is switched, the file management application needs to notify the DLP application to hide the first window corresponding to the confidential file. If the terminal device needs to display a confidential file after the display is switched, the file management application needs to notify the DLP application to redisplay the first window corresponding to the confidential file. In this case, the DLP application needs to redetermine the location and size information of the first window, to achieve display effect that the first window follows and binds to the display window of the file management application. In terms of display effect and user experience, a common file and a confidential file may be displayed by using the same file management application, and the display may be switched. The user perceives only the file management application, but does not perceive the DLP application. In addition, an operation of operating a file by the user is simplified, and user experience in viewing and operating a file is improved.

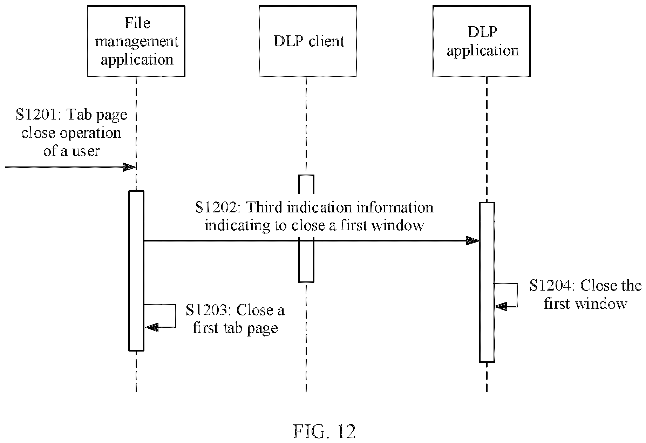

FIG. 12 is still another flowchart of a file management method according to an embodiment of this application. The file management method provided in this embodiment is performed by a terminal device, and is applicable to a scenario in which the terminal device closes a confidential file, for example, the scenario shown in FIG. 8H. It is assumed that the terminal device currently displays a confidential file (a first file) by using a first window, and the first window is located in a first tab page and is located at an upper layer of a display window of a file management application. As shown in FIG. 12, the file management method provided in this embodiment may include the following steps.

S1201: The terminal device receives a tab page close operation of a user, where the tab page close operation is used to close the first tab page.

The tab page close operation is not limited in this embodiment. For example, the tab page close operation may be any one of the following: a tap operation or a touch operation performed on a tab, or a voice control operation.

S1202: In response to the tab page close operation, the file management application sends third indication information to a DLP application. The third indication information indicates to close the first window.

In some implementations, the file management application may send the third indication information to the DLP application through a third interface provided by a DLP client.

S1203: The file management application closes the first tab page.

S1204: The DLP application closes the first window based on the third indication information.

In this implementation, the terminal device currently displays the confidential file (the first file), and the user closes the confidential file by closing the tab page. Because the first file is displayed under control of the DLP application, when the user closes the tab page, the first file displayed in the first window needs to be closed. The file management application sends the third indication information to the DLP application, so that the DLP application closes the first window based on the third indication information.

In terms of display effect and user experience, a common file and a confidential file can be displayed by using the same file management application. When the user closes a tab page, a confidential file corresponding to the tab page is also closed. The user perceives only the file management application, but does not perceive the DLP application. This improves user experience in viewing and operating a file.

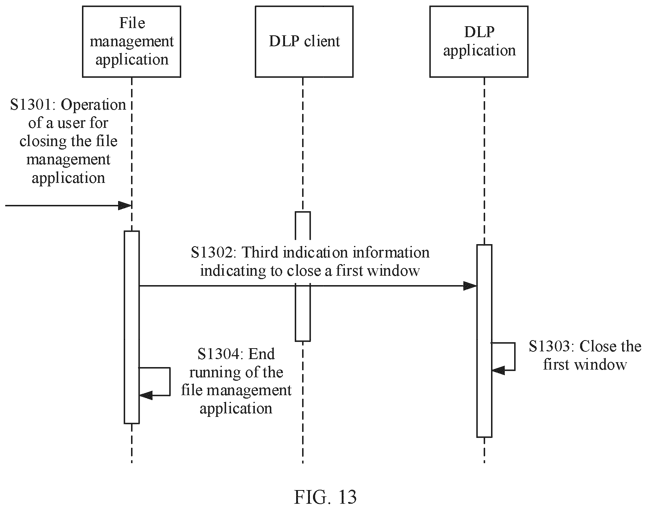

FIG. 13 is yet another flowchart of a file management method according to an embodiment of this application. The file management method provided in this embodiment is performed by a terminal device, and is applicable to a scenario in which the terminal device closes a confidential file. It is assumed that the terminal device currently displays a confidential file (a first file) by using a first window, and the first window is located in a first tab page and is located at an upper layer of a display window of a file management application. As shown in FIG. 13, the file management method provided in this embodiment may include the following steps.

S1301: The terminal device receives an operation of a user for closing the file management application.

S1302: In response to the operation of the user for closing the file management application, the file management application sends third indication information to a DLP application. The third indication information indicates to close the first window.

In some implementations, the file management application may send the third indication information to the DLP application through a third interface provided by a DLP client.

S1303: The DLP application closes the first window based on the third indication information.

S1304: End running of the file management application.

In this implementation, the terminal device currently displays the confidential file (the first file), and the user closes the entire file management application. Because the first file is displayed under control of the DLP application, when the user closes the entire file management application, the first file displayed in the first window needs to be closed. The file management application sends the third indication information to the DLP application, so that the DLP application closes the first window based on the third indication information.

In terms of display effect and user experience, a common file and a confidential file can be displayed by using the same file management application. When the user closes the entire file management application, the confidential file corresponding to the tab page is also closed. The user perceives only the file management application, but does not perceive the DLP application. This improves user experience in viewing and operating a file.

It may be understood that, to implement the foregoing functions, the terminal device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application with reference to embodiments, but it should not be considered that the implementation goes beyond the scope of this application.

In embodiments of this application, functional modules of the terminal device may be obtained through division based on the foregoing method examples. For example, each functional module may be obtained through division in correspondence to each function, or two or more functions may be integrated into one module. It should be noted that, module division in embodiments of this application is an example, and is merely logical function division. During actual implementation, there may be another division manner. It should be noted that a name of a module in embodiments of this application is an example, and the name of the module is not limited during actual implementation.

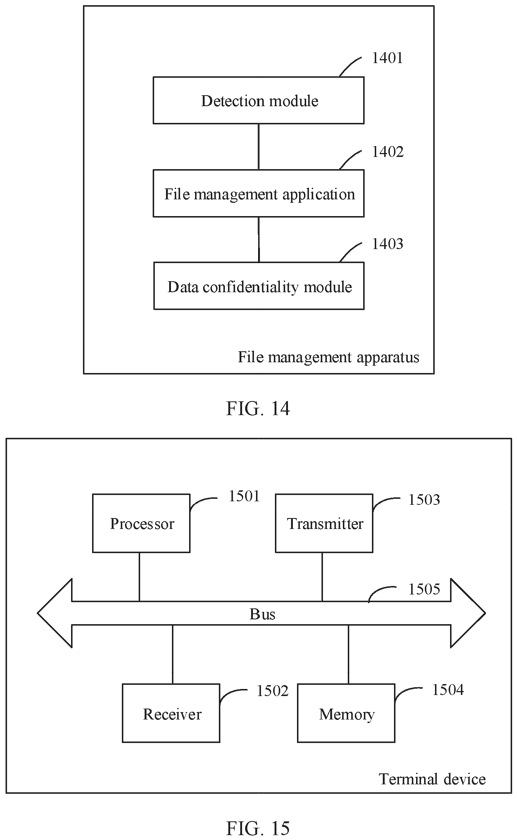

For example, FIG. 14 is a diagram of a structure of a file management apparatus according to an embodiment of this application. The file management apparatus provided in this embodiment may be applied to a terminal device, and is configured to perform the file management method provided in the method embodiments of this application. A technical principle and technical effects of the file management apparatus are similar to those of the file management method. For modules "File management application" and "data confidentiality module" in FIG. 14, refer to related descriptions in FIG. 7.

As shown in FIG. 14, the file management apparatus provided in this embodiment may include: a detection module 1401, a file management application 1402, and a data confidentiality module 1403.

The detection module 1401, configured to receive a first open operation of a user for opening a first file.

In response to the first open operation, the file management application 1402 runs, and is configured to display a first tab page in a display window of the file management application 1402.

The data confidentiality module 1403 is configured to: when the first file is a confidential file, create and display a first window, where the first window is located in the first tab page and is located at an upper layer of the display window.

The data confidentiality module 1403 is further configured to display the first file in the first window.

Optionally, the display window further includes a second tab page, and the second tab page is used to display a common file.

The detection module 1401 is further configured to receive a first tab page switching operation of the user, where the first tab page switching operation is used to switch from display of the first tab page to display of the second tab page.

In response to the first tab page switching operation, the file management application 1402 is further configured to send first indication information to the data confidentiality module 1403, where the first indication information indicates to hide the first window.

The data confidentiality module 1403 is further configured to hide the first window based on the first indication information.

The file management application 1402 is further configured to display the second tab page.

Optionally, the detection module 1401 is further configured to receive a second tab page switching operation of the user, where the second tab page switching operation is used to switch from display of the second tab page to display of the first tab page.

In response to the second tab page switching operation, the file management application 1402 is further configured to send second indication information to the data confidentiality module 1403, where the second indication information indicates to display the first window.

The data confidentiality module 1403 is further configured to: determine latest location and size information of the first window based on the second indication information, and update and display the first window at the upper layer of the display window based on the latest location and size information.

Optionally, the detection module 1401 is further configured to receive a second open operation of the user for opening a second file.

In response to the second open operation, the file management application 1402 is further configured to: display a third tab page in the display window, and send first indication information to the data confidentiality module 1403, where the first indication information indicates to hide the first window.

The data confidentiality module 1403 is further configured to hide the first window based on the first indication information.

Optionally, the detection module 1401 is further configured to receive a tab page close operation of the user, where the tab page close operation is used to close the first tab page.

In response to the tab page close operation, the file management application 1402 is further configured to send third indication information to the data confidentiality module 1403, where the third indication information indicates to close the first window.

The file management application 1402 is further configured to close the first tab page.

The data confidentiality module 1403 is further configured to close the first window based on the third indication information.

Optionally, the detection module 1401 is further configured to receive an operation of the user for closing the file management application 1402.

In response to the operation of the user for closing the file management application 1402, the file management application 1402 is further configured to end running after sending the third indication information to the data confidentiality module 1403, where the third indication information indicates to close the first window.

The data confidentiality module 1403 is further configured to close the first window based on the third indication information.

Optionally, the data confidentiality module 1403 is further configured to:
monitor a location and a size of the display window in real time;
if the location or the size of the display window changes, obtain location and size update information of the first window; and
update and display the first window at the upper layer of the display window based on the location and size update information.

Optionally, the data confidentiality module 1403 is configured to:
monitor the location and the size of the display window, to obtain a monitoring result;
determine location and size information of the first window based on the monitoring result; and
create and display the first window at the upper layer of the display window based on the location and size information of the first window.

Optionally, the monitoring result includes a location and size configuration value that is set by the file management application 1402 for the first window.

The data confidentiality module 1403 is configured to determine the location and size configuration value as the location and size information of the first window.

Optionally, the monitoring result includes location and size information of the display window, and the data confidentiality module 1403 is configured to:
determine the location and size information of the first window based on the location and size information of the display window.

Optionally, before the data confidentiality module 1403 creates and displays the first window, the file management application 1402 is further configured to: determine that the first file is a confidential file, and perform confidential file verification on the first file through a first interface provided by a data confidentiality kit, where the confidential file verification succeeds.

The data confidentiality module 1403 is further configured to: obtain the first file, and perform user credential verification on the first file, where the user credential verification succeeds.

Optionally, the file management application 1402 is configured to:
determine, based on a file type of the first file, that the first file is a confidential file.

Optionally, the data confidentiality module 1403 includes a data confidentiality application.

The data confidentiality application is configured to invoke a second interface provided by the data confidentiality kit to monitor the location and the size of the display window to obtain the monitoring result.

The data confidentiality application is configured to determine the location and size information of the first window based on the monitoring result.

The data confidentiality application is configured to: create and display the first window at the upper layer of the display window based on the location and size information of the first window.

Optionally, the data confidentiality module 1403 includes a data confidentiality application and a data confidentiality service.

The data confidentiality application is configured to invoke the data confidentiality service.

The data confidentiality service is configured to perform the user credential verification on the first file to obtain a user credential verification result, where the user credential verification result indicates that the user credential verification succeeds.

The data confidentiality service is configured to return the user credential verification result to the data confidentiality application.

Optionally, the data confidentiality kit is integrated in an SDK.

FIG. 15 shows another structure of a terminal device according to an embodiment of this application. The terminal device includes a processor 1501, a memory 1504, and a bus 1505. Optionally, the terminal device may further include a receiver 1502 and a transmitter 1503. The processor 1501 includes one or more processing cores. The processor 1501 runs a software program and a module, to perform various function applications and information processing. The memory 1504 may be configured to store at least one program instruction, and the processor 1501 is configured to execute the at least one program instruction, to implement the technical solutions in the foregoing embodiments. The receiver 1502 and the transmitter 1503 may be implemented as a communication component, and the communication component may be a baseband chip. The memory 1504 is connected to the processor 1501 through the bus 1505. An implementation principle and technical effects thereof are similar to those of the foregoing method-related embodiments. Details are not described herein again.

Persons skilled in the art may understand that for ease of description, FIG. 15 shows only one memory and one processor. In an actual terminal device, there may be a plurality of processors and a plurality of memories. The memory may also be referred to as a storage medium, a storage device, or the like. This is not limited in embodiments of this application.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction structure or a data structure and that can be accessed by a computer, but is not limited thereto.

The memory in embodiments of this application may alternatively be a circuit or any other apparatus that can implement a storage function, and is configured to store program instructions and/or data. All or some of the methods provided in embodiments of this application may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on the computer, all or some procedures or functions according to embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product is run on a device, the device is enabled to perform the technical solutions in the foregoing embodiments. An implementation principle and technical effects thereof are similar to those of the foregoing related embodiments. Details are not described herein again.

An embodiment of this application provides a computer-readable storage medium. The computer-readable storage medium stores program instructions. When the program instructions are executed by a device, the device is enabled to perform the technical solutions in the foregoing embodiments. An implementation principle and technical effects thereof are similar to those of the foregoing related embodiments. Details are not described herein again.

In conclusion, the foregoing embodiments are merely intended to describe the technical solutions of this application, but are not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A file management method, comprising:
receiving a first open operation of a user for opening a first file;
in response to the first open operation, running a file management application, and displaying a first tab page in a display window of the file management application;
when the first file is a confidential file, creating and displaying, by a data confidentiality module, a first window, wherein the first window is located in the first tab page and is located at an upper layer of the display window; and
displaying, by the data confidentiality module, the first file in the first window.

2. The method according to claim 1, wherein the display window further comprises a second tab page, the second tab page is used to display a common file, and the method further comprises:
receiving a first tab page switching operation of the user, wherein the first tab page switching operation is used to switch from display of the first tab page to display of the second tab page;
in response to the first tab page switching operation, sending, by the file management application, first indication information to the data confidentiality module, wherein the first indication information indicates to hide the first window;
hiding, by the data confidentiality module, the first window based on the first indication information; and
displaying, by the file management application, the second tab page.

3. The method according to claim 2, wherein the method further comprises:
receiving a second tab page switching operation of the user, wherein the second tab page switching operation is used to switch from display of the second tab page to display of the first tab page;
in response to the second tab page switching operation, sending, by the file management application, second indication information to the data confidentiality module, wherein the second indication information indicates to display the first window; and
determining, by the data confidentiality module, latest location and size information of the first window based on the second indication information, and updating and displaying the first window at the upper layer of the display window based on the latest location and size information.

4. The method according to claim 1 or 3, wherein the method further comprises:
receiving a second open operation of the user for opening a second file;
in response to the second open operation, displaying, by the file management application, a third tab page in the display window;
sending, by the file management application, the first indication information to the data confidentiality module, wherein the first indication information indicates to hide the first window; and
hiding, by the data confidentiality module, the first window based on the first indication information.

5. The method according to claim 1 or 3, wherein the method further comprises:
receiving a tab page close operation of the user, wherein the tab page close operation is used to close the first tab page;
in response to the tab page close operation, sending, by the file management application, third indication information to the data confidentiality module, wherein the third indication information indicates to close the first window;
closing, by the file management application, the first tab page; and
closing, by the data confidentiality module, the first window based on the third indication information.

6. The method according to claim 1 or 3, wherein the method further comprises:
receiving an operation of the user for closing the file management application;
in response to the operation of the user for closing the file management application, sending, by the file management application, third indication information to the data confidentiality module, wherein the third indication information indicates to close the first window;
closing, by the data confidentiality module, the first window based on the third indication information; and
ending running of the file management application.

7. The method according to claim 1 or 3, wherein the method further comprises:
monitoring, by the data confidentiality module, a location and a size of the display window in real time;
if the location or the size of the display window changes, obtaining, by the data confidentiality module, location and size update information of the first window; and
updating and displaying, by the data confidentiality module, the first window at the upper layer of the display window based on the location and size update information.

8. The method according to any one of claims 1 to 7, wherein the creating and displaying, by a data confidentiality module, a first window comprises:
monitoring, by the data confidentiality module, the location and the size of the display window, to obtain a monitoring result;
determining, by the data confidentiality module, location and size information of the first window based on the monitoring result; and
creating and displaying, by the data confidentiality module, the first window at the upper layer of the display window based on the location and size information of the first window.

9. The method according to claim 8, wherein the monitoring result comprises a location and size configuration value that is set by the file management application for the first window; and
the determining, by the data confidentiality module, location and size information of the first window based on the monitoring result comprises:
determining, by the data confidentiality module, the location and size configuration value as the location and size information of the first window.

10. The method according to claim 8, wherein the monitoring result comprises location and size information of the display window; and
the determining, by the data confidentiality module, location and size information of the first window based on the monitoring result comprises:
determining, by the data confidentiality module, the location and size information of the first window based on the location and size information of the display window.

11. The method according to any one of claims 1 to 10, wherein before the creating and displaying, by a data confidentiality module, a first window, the method further comprises:
determining, by the file management application, that the first file is a confidential file;
performing confidential file verification on the first file through a first interface provided by a data confidentiality kit, wherein the confidential file verification succeeds; and
obtaining, by the data confidentiality module, the first file, and performing user credential verification on the first file, wherein the user credential verification succeeds.

12. The method according to claim 11, wherein the determining, by the file management application, that the first file is a confidential file comprises:
determining, by the file management application based on a file type of the first file, that the first file is a confidential file.

13. The method according to any one of claims 1 to 12, wherein the data confidentiality module comprises a data confidentiality application; and the creating and displaying, by a data confidentiality module, a first window comprises:
invoking, by the data confidentiality application, a second interface provided by the data confidentiality kit to monitor the location and the size of the display window to obtain the monitoring result;
determining, by the data confidentiality application, the location and size information of the first window based on the monitoring result; and
creating and displaying, by the data confidentiality application, the first window at the upper layer of the display window based on the location and size information of the first window.

14. The method according to claim 11, wherein the data confidentiality module comprises a data confidentiality application and a data confidentiality service; and
the obtaining, by the data confidentiality module, the first file, and performing user credential verification on the first file, wherein the user credential verification succeeds comprises:
invoking, by the data confidentiality application, the data confidentiality service;
performing, by the data confidentiality service, the user credential verification on the first file to obtain a user credential verification result, wherein the user credential verification result indicates that the user credential verification succeeds; and
returning, by the data confidentiality service, the user credential verification result to the data confidentiality application.

15. The method according to claim 11 or 13, wherein the data confidentiality kit is integrated into a software development kit.

16. A terminal device, comprising a processor and a memory, wherein the memory is coupled to the processor, and the processor is configured to perform the method according to any one of claims 1 to 15.

17. A computer-readable storage medium, wherein the computer-readable storage medium stores a computer program, and when the computer program is run, the method according to any one of claims 1 to 15 is implemented.
